(19) Europäisches Patentamt / European Patent Office / Office européen des brevets

(11) **EP 4 675 963 A1**

(12) **EUROPEAN PATENT APPLICATION**
published in accordance with Art. 153(4) EPC

(43) Date of publication:
**07.01.2026 Bulletin 2026/02**

(21) Application number: **24769859.0**

(22) Date of filing: **08.03.2024**

(51) International Patent Classification (IPC):
***H04L 5/00*** (2006.01)

(52) Cooperative Patent Classification (CPC):
**H04L 5/00; H04W 24/02**

(86) International application number:
**PCT/CN2024/080676**

(87) International publication number:
**WO 2024/188166 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 CN 202310266991**

(71) Applicant: **Sony Group Corporation**
**Tokyo 108-0075 (JP)**

(72) Inventors:
• **WANG, Zhaocheng**
  **Beijing 100084 (CN)**
• **LI, Haojin**
  **Beijing 100027 (CN)**
• **FAN, Tingting**
  **Beijing 100027 (CN)**
• **SUN, Chen**
  **Beijing 100027 (CN)**
• **ZHUO, Yinxiao**
  **Beijing 100084 (CN)**

(74) Representative: **D Young & Co LLP**
**3 Noble Street**
**London EC2V 7BQ (GB)**

(54) **ELECTRONIC DEVICE AND METHOD FOR WIRELESS COMMUNICATION SYSTEM, AND STORAGE MEDIUM**

(57) The present invention relates to an electronic device and method for a wireless communication system, and a storage medium. A first electronic device for an integrated communication and sensing system, the first electronic device comprising a processing circuit, which is configured to indicate, to a second electronic device, control information related to the transmission of a communication signal and a sensing signal, such that the second electronic device can receive and/or process the communication signal and/or the sensing signal according to the control information.

FIG. 4

EP 4 675 963 A1

**Description**

**CROSS-REFERENCE TO RELATED APPLICATIONS**

This application is based on and claims the priority of Chinese patent application with Chinese application number 202310266991.7, filed on March 14, 2023, the disclosure of which is hereby incorporated into this application in its entirety.

**TECHNICAL FIELD**

The present disclosure generally relates to wireless communication systems, and specifically to Integrated Sensing and Communication (ISAC) Systems.

**BACKGROUND**

With the development of wireless communication technologies and the evolution of demands, an increasing number of wireless communication application scenarios have emerged, such as the Internet of Vehicles, intelligent transportation, smart home, smart manufacturing and the industrial Internet of Things. Some of these application scenarios require wireless communication systems to have integrated both communication and sensing functionalities, where communication may refer to the transmission of information between two or more parties, while sensing may refer to the detection of states, characteristics, etc. of things in the environment. Since communication modules and sensing modules have many similarities in architecture, the integrated sensing and communication technology that integrates both communication and sensing modules has become a prominent research topic.

Although discussions on integrated sensing and communication systems have commenced, these current systems under discussion still need to be improved in terms of resource overhead, anti-interference, etc.

**SUMMARY**

The present disclosure proposes a solution related to an integrated sensing and communication system. Specifically, the present disclosure provides an electronic device, a method, and a storage medium for a wireless communication system.

One aspect of the present disclosure relates to a first electronic device for an integrated sensing and communication system, comprising a processing circuitry configured to indicate control information related to transmission of a communication signal and a sensing signal to a second electronic device, such that the second electronic device is able to perform reception and/or processing of the communication signal and/or the sensing signal according to the control information.

Another aspect of the present disclosure relates to a second electronic device for an integrated sensing and communication system, comprising a processing circuitry configured to perform reception and/or processing of a communication signal and/or a sensing signal according to control information related to transmission of the communication signal and the sensing signal indicated by a first electronic device.

Another aspect of the present disclosure relates to a method for a first electronic device in an integrated sensing and communication system, comprising: indicating control information related to transmission of a communication signal and a sensing signal to a second electronic device, such that the second electronic device is able to perform reception and/or processing of the communication signal and/or the sensing signal according to the control information.

Another aspect of the present disclosure relates to a method for a second electronic device in an integrated sensing and communication system, comprising: performing reception and/or processing of a communication signal and/or a sensing signal according to control information related to transmission of the communication signal and the sensing signal indicated by a first electronic device.

Another aspect of the present disclosure relates to a non-transitory computer-readable storage medium having executable instructions stored thereon, which, when executed, implement the methods as described in the above aspects.

Another aspect of the present disclosure relates to a device. The device comprises: a processor and a storage having executable instructions stored thereon, which, when executed, implement the methods as previously described.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

## BRIEF DESCRIPTION OF THE DRAWINGS

A better understanding of the present disclosure may be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the disclosure and to explain the principles and advantages of the disclosure. Wherein:

FIG. 1 schematically illustrates some exemplary application scenarios of integrated sensing and communication;

FIG. 2A schematically illustrates a relationship between a sensing beam and a communication beam in an integrated sensing and communication system according to the present disclosure;

FIG. 2B schematically illustrates an exemplary application of an integrated sensing and communication system according to the present disclosure;

FIG. 3 schematically illustrates a multipath communication channel of the present disclosure to which the present disclosure is applicable;

FIG. 4 schematically illustrates a conceptual operation flow according to an embodiment of the present disclosure;

FIG. 5 schematically illustrates a conceptual configuration of an electronic device on a transmitting end device side according to an embodiment of the present disclosure;

FIG. 6 schematically illustrates a conceptual configuration of an electronic device on a receiving end device side according to an embodiment of the present disclosure;

FIG. 7 schematically illustrates transmission patterns of a communication signal and a sensing signal according to an embodiment of the present disclosure;

FIG. 8 schematically illustrates an example of interference from a sensing beam to a communication beam;

FIG. 9 schematically illustrates a process of determining and feeding back interference intensity from a sensing beam to a communication beam by a receiving end device according to an embodiment of the present disclosure;

FIG. 10 schematically illustrates an exemplary arrangement of a scanning order for sensing beams according to an embodiment of the present disclosure;

FIG. 11A schematically illustrates a performance simulation diagram of an interference cancellation method according to the present disclosure;

FIG. 11B schematically illustrates a performance simulation diagram of an interference management solution according to the present disclosure;

FIG. 12 schematically illustrates an exemplary information interaction between a transmitting end and a receiving end of an integrated sensing and communication system according to the present disclosure;

FIG. 13 is a block diagram of an example structure of a personal computer as an information processing device that may be employed in an embodiment of the present disclosure;

FIG. 14 is a block diagram showing a first example of a schematic configuration of a gNB to which the technology of the present disclosure may be applied;

FIG. 15 is a block diagram showing a second example of a schematic configuration of a gNB to which the technology of the present disclosure may be applied;

FIG. 16 is a block diagram showing an example of a schematic configuration of a smart phone to which the technology of the present disclosure may be applied; and

FIG. 17 is a block diagram showing an example of a schematic configuration of a car navigation device to which the technology of the present disclosure may be applied.

While the embodiments described in this disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternative falling within the spirit and scope of the claims.

## DETAILED DESCRIPTION

The following describes representative applications of various aspects of the device, method and the like according to the present disclosure. The description of these examples is merely to add context and help to understand the described embodiments. Therefore, it is clear to those skilled in the art that the embodiments described below may be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least a transmitting end device and a receiving end device. The transmitting end device and the receiving end device may be one of a control device (e.g., a base station control) or a terminal device. In particular, the transmitting end device and the receiving end device may both be terminal devices.

In this disclosure, the term "base station" or "control device" has the full breadth of its ordinary meaning and includes at least a wireless communication station that is a part of a wireless communication system or radio system to facilitate communication. As an example, a base station may be an eNB of the 4G communication standard, a gNB of the 5G communication standard, a remote radio head, a wireless access point, a drone control tower, or a communication apparatus performing similar functions. In this disclosure, "base station" and "control device" may be used interchangeably, or "control device" may be implemented as a part of "base station". Application examples of the base station/terminal device will be described in detail below by taking the base station as an example in conjunction with the accompanying drawings.

In this disclosure, the term "terminal device" or "user equipment (UE)" has the full breadth of its ordinary meaning and includes at least a terminal device that is a part of a wireless communication system or radio system to facilitate communication. As an example, a terminal device may be, for example, a mobile phone, a laptop, a tablet, a vehicle-mounted communication device, a wearable device, a sensor, or the like, or a component thereof. In this disclosure, "terminal device" and "user equipment" (hereinafter may be simply referred to as "UE") may be used interchangeably, or "terminal device" may be implemented as a part of "user equipment".

In the present disclosure, the term "device on the core network side" or "entity on the core network side" has the full breadth of its ordinary meaning, and may be a network element device that provides one or more functions on the core network side, or, where appropriate, may be a software and/or hardware module that provides one or more functions on the core network side. In particular, where one or more functions on the core network side are provided in a distributed manner, "device on the core network side" or "entity on the core network side" may be a general term for devices and/or modules that implement the one or more functions. Hereinafter, "device on the core network side" or "entity on the core network side" is sometimes also simply referred to as "core network".

In the present disclosure, the term "transmitting end" has the full breadth of its ordinary meaning, generally indicating the side that transmits data in a communication system, which may be a control device/base station side or a terminal device/UE side. Similarly, the term "receiving end" has the full breadth of its ordinary meaning, and accordingly may indicate the side that receives data in a communication system, which may be a terminal device/UE side or a control device/base station side. In addition, in the present disclosure, a same device may also act as both a transmitting end and a receiving end.

In the present disclosure, the term "uplink" or "uplink communication link" generally refers to a transmission link from a transmitting end to a receiving end, and the term "downlink" or "downlink communication link" generally refers to a transmission link from a receiving end to a transmitting end.

As introduced in the background section, with the development of wireless communication technologies and the evolution of demands, an increasing number of wireless communication application scenarios have emerged that require both communication and sensing functionalities.

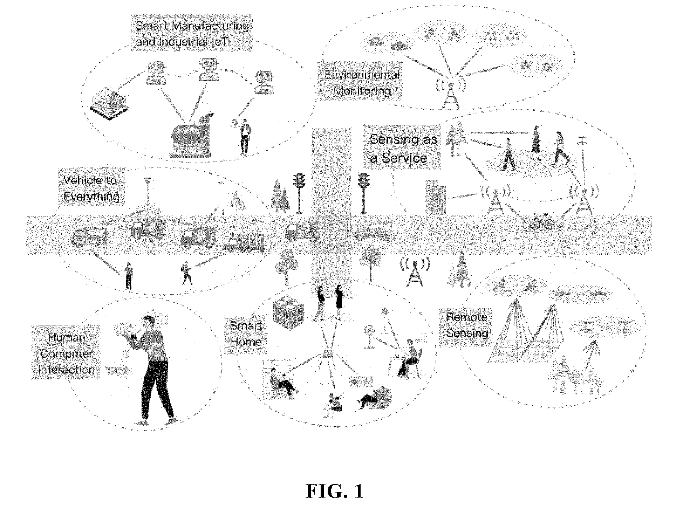

FIG. 1 illustrates some exemplary application scenarios of integrated sensing and communication. As illustrated in FIG. 1, these application scenarios may include smart manufacturing and industrial Internet of Things that support predictive maintenance, automatic guided vehicles, employee location and authorization, etc., environmental monitoring that supports weather forecasting, pollutant monitoring, rainfall monitoring, insect detection, etc., sensing as a service that supports mobile crowd sensing, drone monitoring and management, channel knowledge map construction, cooperative positioning and imaging, etc., remote sensing that supports satellite imaging and broadcasting, drone swarm Aperture Radar (SAR) imaging, etc., smart home that supports human proximity detection, spatial aware control, vital signal monitoring, fall detection, sensing-aided wireless charging, etc., human-computer interaction that supports gesture recognition, head/arm motion recognition, keystroke recognition, etc., and vehicle to everything that supports high-precision positioning, extended sensor, secure access, simultaneous localization and mapping, etc., and so on. In these exemplary application scenarios, communication may occur between two or more entities to transmit information. In addition, an entity may also transmit sensing signals while communicating, to detect states, characteristics, etc. of things in the environment, such as detecting humidity, pollutants, insects, etc. in the environment, or detecting the existence and/or distance of specific object(s) or obstacle(s) in a specific area, etc.

For example, according to differences of sensing signal processing nodes, sensing may be classified into active sensing by a transmitting end, active sensing by a receiving end, or joint sensing by a transmitting end and a receiving end. In the case of active sensing by a receiving end, a transmitting end may transmit a sensing signal to a sensing object as a receiving end. The receiving end may receive the sensing signal (for example, after determining that the sensing signal is a sensing signal for itself) and perform processing of the received sensing signal to obtain sensing information. Additionally, the receiving end may also report the processed sensing information to a control device of a wireless network or a network element responsible for sensing in the core network for further processing. In the present disclosure, a beam carrying a sensing signal is referred to as a sensing beam, and a beam carrying a communication signal is referred to as a communication beam.

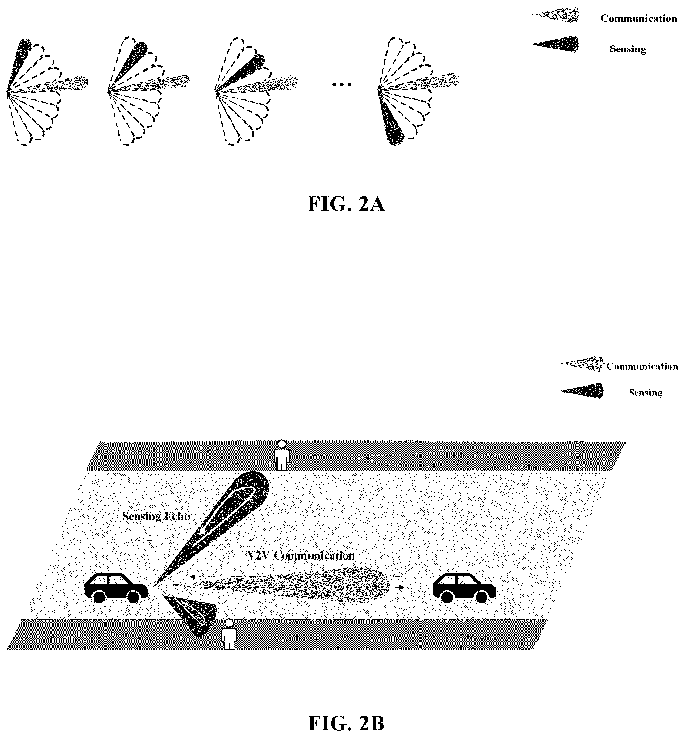

In the case of active sensing by a transmitting end, sensing may be performed transparently relative to a sensed target. For example, the transmitting end may perform processing of an echo signal generated by the reflection/scattering/diffraction of the sensed target on a signal transmitted by the transmitting end to obtain sensing information. For example, the echo signal of the communication signal may be used directly for sensing. However, since communication beams are highly directional, for a sensed target that is not in the direction of a communication beam, the beam receiving gain is too small and difficult to be detected. Therefore, according to the present disclosure, the transmitting end may transmit a signal (i.e., a sensing signal) that can cover a wider range of directions for sensing. FIG. 2A schematically illustrates a relationship between a sensing beam and a communication beam in an integrated sensing and communication system according to the present disclosure. As illustrated in FIG. 2A, the sensing beam may cover a wider range than the communication beam by scanning, but it may be a beam for a sensing target that is closer than a communication target. In the present disclosure, the sensing beam may cover the entire sensing region by narrow beam scanning. For example, for each transmission of the sensing signal, the transmitting end may transmit the sensing signal utilizing one sensing beam of a plurality of sensing beams corresponding to a plurality of directions, and switch to another sensing beam when transmitting the sensing signal next time. In the following description, the example of the transmitting end transmitting the sensing signal using one sensing beam at one time is used for explanation. However, the present disclosure is not limited to this scanning manner for sensing beams. For example, when the transmitting end has a plurality of radio frequency modules, the transmitting end may transmit sensing signals utilizing a plurality of sensing beams at the same time, wherein, each radio frequency module transmit a sensing signal using one sensing beam.

FIG. 2B illustrates one exemplary integrated sensing and communication application utilizing the echo of a sensing signal for sensing to which the technology of the present disclosure may be applied. As illustrated in FIG. 2A, an integrated sensing and communication system may be used in a vehicle-to-vehicle (V2V) communication scenario. In the V2V communication scenario, vehicles may communicate with each other to transfer information such as vehicle speed, location, and road conditions, etc. At the same time, each vehicle may also sense any objects around the vehicle that may affect driving, such as pedestrians, obstacles, and other vehicles, etc., by transmitting sensing signals. The objects, which are sensing targets, may simply physically reflect/refract/diffract the sensing signals to generate echo signals. For example, locations, moving speeds, etc. of the sensing targets may be sensed by comparing the differences between the sensing signals and the echo signals.

In the case of joint sensing by a transmitting end and a receiving end, the transmitting end may perform processing of an echo signal of a sensing signal to obtain sensing information, while the receiving end may perform processing of the received sensing signal to obtain the sensing information. The transmitting end or the receiving end or other network element in the wireless network (for example, a network element responsible for sensing in the core network) may perform comprehensively processing of the information obtained by the transmitting end based on the echo signal and the information obtained by the receiving end based on the sensing signal, to obtain the final sensing information.

In an integrated sensing and communication system according to the present disclosure, the integrated sensing and communication system according to the present disclosure may be discussed on the basis of the following assumptions: 1. The integrated sensing and communication system includes a communication module and an active radar module, and the two may share transmitting end hardware devices and share time and frequency resources; 2. A transmitter may transmit communication and sensing beams simultaneously or non-simultaneously; 3. The communication receiving end is at the far end, and the radar receiving end is provided near the transmitting end, and it is approximately assumed that the transmitting end transmitter and the radar receiver antenna are in the same position.

The following briefly introduces a communication signal model and a sensing signal model applicable to an integrated sensing and communication system according to the present disclosure.

Communication Signal Model

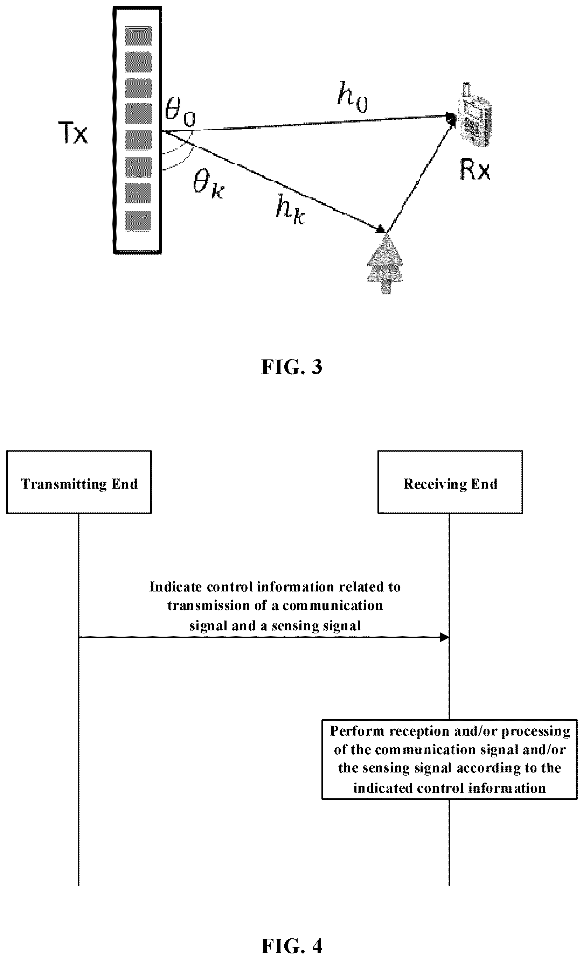

For a communication module in an integrated sensing and communication system, it is assumed that an application scenario is a millimeter wave multipath channel. FIG. 3 illustrates a typical multipath channel, wherein, Tx is a transmitter, Rx is a receiver, the transmitter uses a half-wavelength Uniform Linear Array (ULA) antenna, the number of antennas is donated as $N_T$, the receiver is a single antenna, and the channel from the transmitter to the receiver is donated as $h$ ($h$ is a $N_T \times 1$-dimensional vector), including one Line of Sight (LoS) path $h_0$ ($h_0$ is a $N_T \times 1$-dimensional vector) and $P$ Non Line of Sight (NLoS) paths $h_k$ ($h_k$ is one $N_T \times 1$-dimensional vector), $k = 1, \ldots, P$. The attenuation factor of the path $h_k$ is donated as $\gamma_k$, $k = 0, 1, \ldots, P$, ($\gamma_k$ is a complex number), then the multipath channel h may be expressed as:

$$h = \sum_{k=0}^{P} \gamma_k h_k \qquad \text{(Formula 1)}$$

Assume that the Angle of departure (AoD) of the $k^{th}$ path is $\theta_k^{(AoD)}$, then the $k^{th}$ path may be written as

$$h_k = a\left(N_T, \theta_k^{(AoD)}\right), k = 0, 1, \dots, P \quad \text{(Formula 2)}$$

wherein:

$$a(N, \theta) = \frac{1}{\sqrt{N}}\left[1, e^{-j\pi\cos\theta}, e^{-2j\pi\cos\theta}, \dots, e^{-(N-1)j\pi\cos\theta}\right]^T \quad \text{(Formula 3)}$$

$a(N,\theta)$ is the steering vector in $\theta$ angular direction of the $N^{th}$ antenna.

The precoding vectors used for communication and sensing are denoted as $f^c$ ($f^c$ is a $N_T \times 1$-dimensional vector) and $f^s$ ($f^s$ is a $N_T \times 1$-dimensional vector), respectively, and the communication signal and sensing signal carried are denoted as $s^c$ ($s^c$ is a complex number) and $s^s$ ($s^s$ is a complex number), respectively, then the user received signal y(y is a complex number) may be written as,

$$y = h^H f^c s^c + h^H f^s s^s + n \quad \text{(Formula 4)}$$

wherein the first item is the communication signal, the second item is the interference caused by the sensing signal, and the third item is the noise. Hereinafter, donating $q^c = h^H f^c$, then $|q^s|^2$ is the communication beamforming gain, and donating $q^s = h^H f^s$, then $|q^c|^2$ is the sensing signal interference power.

Sensing Signal Model

For a sensing module in an integrated sensing and communication system, consider using a modulation technology that is compatible with communication. For the convenience of describing the sensing signal model, it is assumed here that orthogonal frequency division multiplexing (OFDM) is used. For example, OFDM signals are used to sense the distance and speed of a sensing target. However, it should be understood that the present disclosure is not limited to OFDM, and any modulation technology compatible with communication may be used. Assume that the coherent processing interval contains $N_{sym}$ OFDM symbols, one OFDM symbol has a duration of $T_{OFDM}$, contains $N_c$ subcarrier signals, and the subcarrier spacing is $\Delta f$, and in the transmitted $\mu^{th}$ OFDM symbol, the signal transmitted on the $n^{th}$ subcarrier is $s[\mu, n]$, $\mu = 0, 1, \dots, N_{sym} - 1$, $n = 0, 1, \dots, N_c - 1$. Assume that the number of transmitter antennas is $N_T$, the transmission steering vector used is $f$ ($f$ is a $N_T \times 1$ vector), and the receiver uses an omnidirectional single antenna for reception. Assume that there are K sensing targets in the environment, and the round-trip latency of each sensing target signal is within the cyclic prefix. The channel between the transmitter and the $k^{th}$ sensing target object is $h_k$ ($h_k$ is a $N_T \times 1$ vector), the attenuation and reflection coefficient is $A_k$ ($A_k$ is a complex number), the target object distance is $R_k$, and the Doppler frequency shift is $f_{D,k}$, then after being reflected by the sensing target, the echo signal of the received OFDM signal $y_k[\mu, n]$ may be expressed as:

$$y_k[\mu, n] = A_k \exp\left(-j2\pi n\Delta f \frac{2R_k}{c_0}\right) \exp\left(j2\pi\mu T_{OFDM}f_{D,k}\right) h_k^H f s[\mu, n] \quad \text{(Formula 5)}$$

wherein the Doppler shift is $f_{D,k} = \frac{2v_{rel}f_c}{c_0}$, $v_{rel}$ is the radial relative moving speed between the transmitting end radar and the sensing target, $f_c$ is the carrier frequency, and $c_0$ is the speed of light. The echo signals reflected by all sensing targets in the environment are superimposed to form the final received signal received by the transmitting end radar:

$$y[\mu, n] = \sum_{k=1}^{K} y_k[\mu, n] = \sum_{k=1}^{K} A_k \exp\left(-j2\pi n\Delta f \frac{2R_k}{c_0}\right) \exp\left(j2\pi\mu T_{OFDM}f_{D,k}\right) h_k^H f s[\mu, n$$

$$\text{(Formula 6)}$$

By gridding the range-Doppler frequency shift parameters and performing relevant processing, the range-Doppler phase diagram of radar detection may be obtained. $h_k^H f$ is the detection gain brought by the transmitting end beam. The larger the detection gain, the easier it is to distinguish the target on the phase diagram. The phase diagram expression may be

written as:

$$G(R, f_D) = \sum_{\mu=0}^{N_{sym}-1} \sum_{n=0}^{N_c-1} y[\mu, n] \, conj(s[\mu, n]) \exp\left(j2\pi n\Delta f \frac{2R}{c_0}\right) \exp(-j2\pi\mu T_{OFDM} f_D)$$

(Formula 7)

wherein, $conj(s[\mu, n])$ represents the conjugate of $s[\mu, n]$.

For the sake of simplicity, the above sensing signal model only considers echo signals generated by reflecting sensing signals by sensing targets. In fact, for example, there may also consider echo signals generated by reflecting, refracting or diffracting or a combination thereof, sensing signals by sensing targets.

In an integrated sensing and communication system, since there are both communication signals and sensing signals, it is important to enable a receiving end to correctly receive the required signals.

FIG. 4 schematically illustrates a conceptual operation flow according to an embodiment of the present disclosure.

As illustrated in FIG. 4, according to the present disclosure, a transmitting end may indicate control information related to transmission of a communication signal and a sensing signal to a receiving end. The receiving end may perform reception and/or processing of the communication signal and/or the sensing signal according to the control information. The control information according to the present disclosure may include any information related to the communication signal and the sensing signal, required for the receiving end to perform reception and/or processing of the communication signal and/or the sensing signal, such as information indicating a sensing beam configuration, information indicating a transmission pattern, duration information, information indicating at least one parameter for canceling interference from the sensing signal to the communication signal, and any other appropriate information described in detail below. According to the present disclosure, the transmitting end may explicitly indicate the control information to the receiving end, for example, the transmitting end may transmit the control information to the receiving end. Alternatively, the transmitting end may also at least partially implicitly indicate the control information. For example, at least part of the control information may be agreed or specified in advance in, for example, a relevant standard, that is, at least part of the control information may be default. In addition, the transmitting end may explicitly transmit additional control information to the receiving end on the basis of the default part of the control information, such that the receiving end performs reception and/or processing of the communication signal and/or the sensing signal by integrating all the indicated control information. According to the present disclosure, at least part of the control information may be transmitted using any appropriate signaling and/or message, such as via RRC signaling or MAC CE.

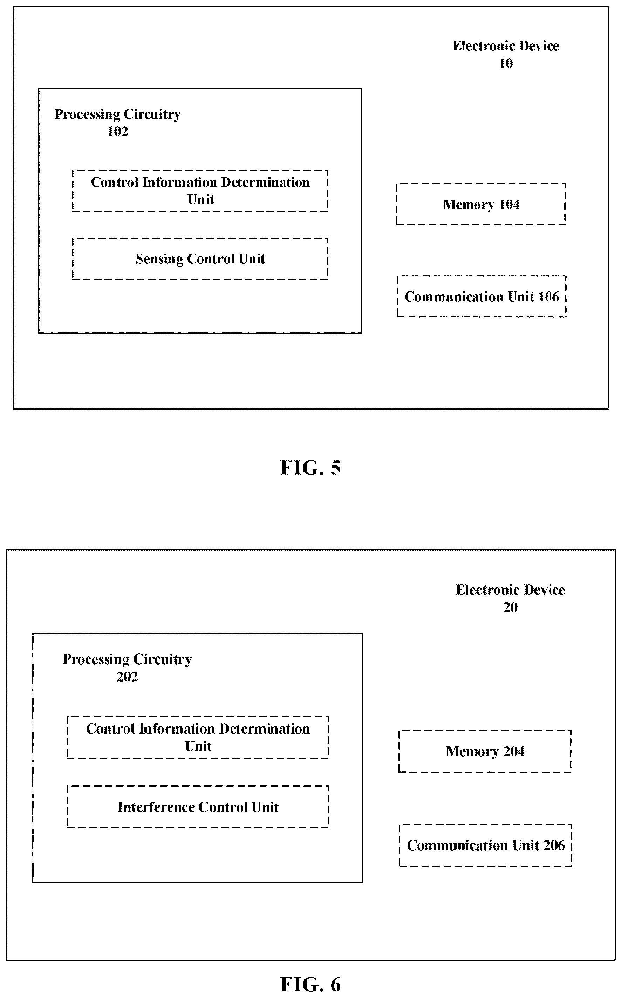

FIG. 5 schematically illustrates a conceptual configuration of an electronic device on a transmitting end device side according to an embodiment of the present disclosure.

As illustrated in FIG. 5, an electronic device 10 may include a processing circuitry 102. The processing circuitry 102 may be configured to indicate control information related to transmission of a communication signal and a sensing signal to a receiving end electronic device, such that the receiving end terminal device may perform reception and/or processing of the communication signal and/or the sensing signal according to the control information.

The processing circuitry 102 may be in the form of a general-purpose processor or a special-purpose processing circuit, such as an ASIC. For example, the processing circuitry 102 can be constructed by a circuit (hardware) or a central processing device (such as, a Central Processing Unit (CPU)). In addition, a program (software) for operating the circuit (hardware) or the central processing device may be carried on the processing circuitry 102. The program can be stored in a memory (such as arranged in a memory 104) or an external storage medium connected from outside, and downloaded via a network (such as the Internet).

In one implementation, the processing circuitry 102 may include a control information determination unit. The control information determination unit may determine control information to be indicated to a receiving end electronic device. For example, the control information determination unit may determine sensing beam configuration information. For another example, the control information determination unit may determine a transmission pattern of a communication signal and a sensing signal. For another example, the control information determination unit may determine duration of a transmission pattern of a communication signal and a sensing signal. For another example, the control information determination unit may also determine information required for a receiving end electronic device to perform interference cancellation on the received information.

In one implementation, the processing circuitry 102 may further include a sensing control unit. The sensing control unit may, for example, configure a sensing signal based on sensing signal configuration information, and control sensing utilizing the sensing signal.

Optionally, the electronic device 10 may also include a memory 104 and a communication unit 106 shown in dashed lines in the figure. In addition, the electronic device 10 may also include other components not shown, such as a radio frequency link, a baseband processing unit, a network interface, a processor, a controller, and the like. The processing circuitry 102 may be associated with the memory 104 and/or the communication unit 106. For example, the processing circuitry 102 may be directly or indirectly (e.g., other components may be connected therebetween) connected to the memory 104 for data access. For another example, the processing circuitry 102 may be directly or indirectly connected to the communication unit 106 to transmit radio signals via the communication unit 106 and to receive radio signals via the communication unit 106.

The memory 104 may store various information determined and/or generated by the processing circuitry 102 (e.g., control information related to transmission of a communication signal and a sensing signal, sensing beam configuration, etc.), programs and data for operations of the electronic device 10, data to be transmitted by the communication unit 106, etc. The memory 104 is drawn with dashed lines because it could also be located within the processing circuitry 102 or external to the electronic device 10. The memory 104 may be a volatile memory and/or a non-volatile memory. For example, the memory 104 may include, but is not limited to, a random-access memory (RAM), a dynamic random-access memory (DRAM), a static random-access memory (SRAM), a read-only memory (ROM), and a flash memory.

The communication unit 106 may be configured to communicate with a terminal device under the control of the processing circuitry 102. In one example, the communication unit 106 may be implemented as a transmitter or transceiver, including communication components such as an antenna array and/or a radio frequency link.

Although the processing circuitry 102 is shown as being separate from the communication unit 106 in FIG. 5, the processing circuitry 102 may also be implemented to include the communication unit 106, for example, in combination with a communication control unit. Additionally, the processing circuitry 102 may also be implemented to include one or more other components in the electronic device 10, or the processing circuitry 102 may be implemented as the electronic device 10 itself. In actual implementation, the processing circuitry 102 may be implemented as a chip (such as an integrated circuit module comprising a single wafer), a hardware component, or a complete product.

FIG. 6 schematically illustrates a conceptual configuration of an electronic device on a receiving end device side according to an embodiment of the present disclosure.

As illustrated in FIG. 6, the electronic device 20 may include a processing circuitry 202. The processing circuitry 202 may be configured to perform reception and/or processing of a communication signal and/or a sensing signal according to control information related to transmission of the communication signal and the sensing signal indicated by a transmitting end electronic device (e.g., the electronic device 10).

The processing circuitry 202 may be in the form of a general-purpose processor or a special-purpose processing circuit, such as an ASIC. For example, the processing circuitry 202 can be constructed by a circuit (hardware) or a central processing device (such as, a Central Processing Unit (CPU)). In addition, a program (software) for operating the circuit (hardware) or the central processing device may be carried on the processing circuitry 202. The program can be stored in a memory (such as arranged in a memory 204) or an external storage medium connected from outside, and downloaded via a network (such as the Internet).

In one implementation, the processing circuitry 202 may include a control information determination unit. The control information determination unit may determine information required for performing reception and/or processing of a communication signal and/or a sensing signal according to information indicated by a transmitting end electronic device. For example, the control information determination unit may determine a transmission pattern of a communication signal and a sensing signal. For another example, the control information determination unit may determine duration of a transmission pattern of a communication signal and a sensing signal. For another example, the control information determination unit may also determine information required for a receiving end electronic device to perform interference cancellation on the received information. For another example, the control information determination unit may determine a configuration of a sensing signal.

In one implementation, the processing circuitry 202 may further include an interference control unit. The interference control unit may, for example, perform interference cancellation processing on the received signal. In addition, the interference control unit may, for example, perform interference measurement on the received information, and may additionally transmit the result of the interference measurement to the communication unit 206 so as to, for example, transmit it to a transmitting end electronic device.

Optionally, the electronic device 20 may also include a memory 204 and a communication unit 206 shown in dashed lines in the figure. In addition, the electronic device 20 may also include other components not shown, such as a radio frequency link, a baseband processing unit, a network interface, a processor, a controller, and the like. The processing circuitry 202 may be associated with the memory 204 and/or the communication unit 206. For example, the processing circuitry 202 may be directly or indirectly (e.g., other components may be connected therebetween) connected to the memory 204 for data access. For another example, the processing circuitry 202 may be directly or indirectly connected to the communication unit 206 to transmit radio signals via the communication unit 206 and to receive radio signals via the communication unit 206.

The memory 204 may store various information determined and/or generated by the processing circuitry 202 (e.g., control information related to transmission of a communication signal and a sensing signal, interference intensity information, etc.), programs and data for operations of the electronic device 20, data to be transmitted by the communication unit 206, etc. The memory 204 is drawn with dashed lines because it could also be located within the processing circuitry 202 or external to the electronic device 20. The memory 204 may be a volatile memory and/or a non-volatile memory. For example, the memory 204 may include, but is not limited to, a random-access memory (RAM), a dynamic random-access memory (DRAM), a static random-access memory (SRAM), a read-only memory (ROM), and a flash memory.

The communication unit 206 may be configured to communicate with a terminal device under the control of the processing circuitry 202. In one example, the communication unit 206 may be implemented as a transmitter or transceiver, including communication components such as an antenna array and/or a radio frequency link.

Although the processing circuitry 202 is shown as being separate from the communication unit 206 in FIG. 6, the processing circuitry 202 may also be implemented to include the communication unit 206, for example, in combination with a communication control unit. Additionally, the processing circuitry 202 may also be implemented to include one or more other components in the electronic device 20, or the processing circuitry 202 may be implemented as the electronic device 20 itself. In actual implementation, the processing circuitry 202 may be implemented as a chip (such as an integrated circuit module comprising a single wafer), a hardware component, or a complete product.

It should be noted that in the description in conjunction with FIG. 5 and FIG. 6, the above various units are only logical modules divided according to specific functions they implement, and are not used to limit specific implementations, for example, they may be implemented in software, hardware, or a combination of software and hardware. In actual implementation, each of the above units may be implemented as an independent physical entity, or may also be implemented by a single entity (for example, a processor (CPU or DSP, etc.), integrated circuit, etc.). In addition, each of the above units is shown with dotted lines in the drawings to indicate that these units may not actually exist, and the operations/functions they realized may be realized by the processing circuitry itself.

The integrated sensing and communication system of the present disclosure may be applied to various communication scenarios, for example, traditional communication between a control device (e.g., a base station) and a terminal device, or, for example, sidelink communication. According to the present disclosure, the electronic device 10 as a transmitting end device may be a control device for wireless communication, while the electronic device 20 as a transmitting end device may be a terminal device for wireless communication; or the electronic device 10 as a transmitting end device may be a terminal device for wireless communication, while the electronic device 20 as a transmitting end device may be a control device for wireless communication; the electronic device 10 as a transmitting end device and the electronic device 20 as a transmitting end device may both be terminal devices for wireless communication.

The integrated sensing and communication system of the present disclosure may be applied to various sensing methods, for example, active sensing by a transmitting end, active sensing by a receiving end, or joint sensing by a transmitting end and a receiving end. According to the present disclosure, a transmitting end may transmit information indicating its sensing capability to a control device for wireless communication. For example, the sensing capability may include a scanning range of sensing beams supported by the transmitting end, a generation method of a sensing sequence as sensing signals and parameters, the number of sensing beams that can be transmitted simultaneously (for example, in the case of the transmitting end having a plurality of radio frequency modules for transmitting a plurality of beams simultaneously), and any other capabilities required for the transmitting end to participate in sensing. According to the present disclosure, a control device for wireless communication may transmit information indicating a sensing beam configuration to a transmitting end. For example, the sensing beam configuration may be determined by the control device for wireless communication or a network element responsible for sensing in the core network based on sensing capabilities of the transmitting end. For example, the transmitting end may also determine the sensing beam configuration by itself, and report the sensing beam configuration to the control device for wireless communication or the network element responsible for sensing in the core network when necessary. For example, the transmitting end may configure one or more beams for transmitting sensing signals according to the sensing beam configuration information. For example, the sensing beam configuration may include a sensing sequence generation method and parameters, a sensing signal transmission method, a sensing signal resource mapping rule, a sensing service start and end time, etc. For example, the wireless communication control device may transmit information indicating the sensing beam configuration to the transmitting end by utilizing any applicable signaling/message (such as Radio Resource Control (RRC) signaling or Media Access Control Control Element (MAC CE)). Alternatively, at least part of the information about the configuration of sensing beam(s) may be predetermined or specified in advance in a relevant standard.

In the case of the receiving end participating in sensing (for example, actively sensing by the receiving end or joint sensing by the transmitting end and the receiving end), the transmitting end or the control device for wireless communication may transmit information indicating the sensing beam configuration to the receiving end, such that the receiving end perform reception and/or processing of the sensing signal. For example, any applicable signaling/message (such as RRC signaling or MAC CE) may be utilized to transmit information indicating the sensing beam configuration to the receiving end. For example, the information indicating the sensing beam configuration received by the receiving end from the transmitting end may be the same as the information received by the transmitting end from the control device, or may be further determined according to it. For example, the transmitting end may select one of a plurality of optional sensing beam configurations transmitted by the control device to configure the sensing beam. For another example, the transmitting end may also transmit, to the receiving end, part of the information about the sensing beam configuration that the receiving end needs to use for processing the received sensing signal. For another example, the transmitting end may also transmit a plurality of sensing beam configurations to the receiving end for use in a plurality of situations. In this case, the correspondence between the sensing beam configurations and the applicable situations may be agreed or determined in advance, or indicated by the transmitting end or the control device, or selected by the receiving end.

In the case of the receiving end participating in sensing, the receiving end may perform processing of the sensing signal based on the information indicating the sensing beam configuration. For example, the receiving end may determine angle direction, distance, and relative speed with the transmitting end or an environmental sensing target by means of the intensity, the phase rotation, the frequency offset, the latency and the like of a sensing signal. For another example, the receiving end may simply determine the intensity, the phase rotation, the frequency offset, the latency and the like of a sensing signal, and transmit the determined results to the control device for wireless communication or the network element responsible for sensing in the core network, so as to perform more complex processing to determine further sensing information.

In an integrated sensing and communication system of the present disclosure, since there are both a communication signal and a sensing signal, it is necessary to let a receiving end know how the two signals are transmitted, for example, whether they are transmitted separately or simultaneously. Therefore, according to the present disclosure, the control information related to transmitting of the communication signal and the sensing signal indicated by the transmitting end to the receiving end as illustrated in FIG. 4 may include indication of a transmission pattern of the communication signal and the sensing signal, wherein, the transmission pattern includes any of: a first pattern of transmitting the communication signal and the sensing signal by using a same time-frequency resource, a second pattern of only transmitting the communication signal utilizing a separate time-frequency resource, and a third pattern of only transmitting the sensing signal utilizing a separate time-frequency resource.

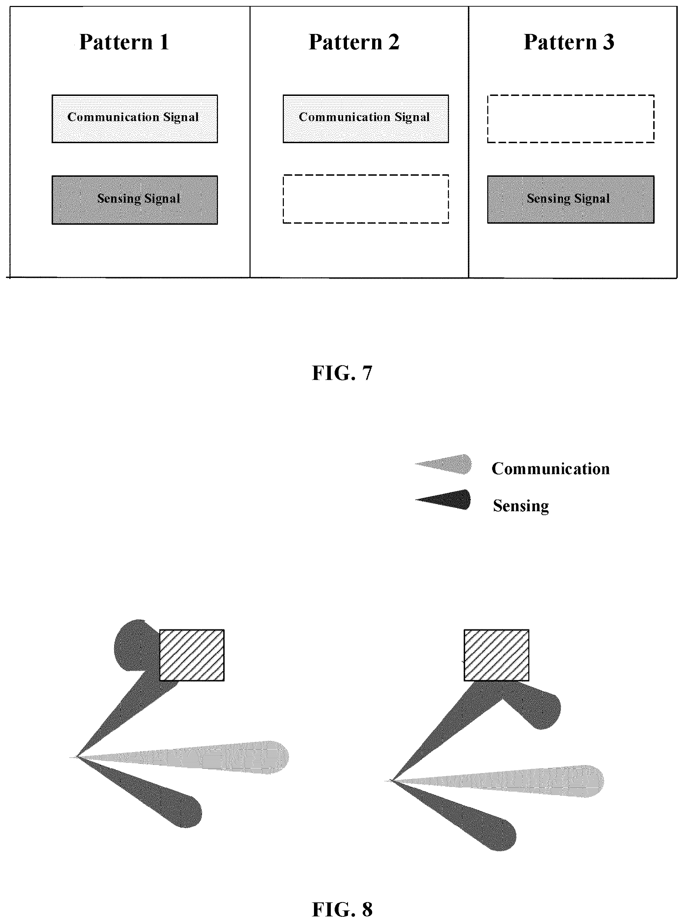

FIG. 7 schematically illustrates transmission patterns of a communication signal and a sensing signal according to an embodiment of the present disclosure. As illustrated in FIG. 7, pattern 1 (i.e., the first pattern above) may be the communication signal and the sensing signal being transmitted by using a same time-frequency resource. For example, the communication signal and the sensing signal both may be transmitted using the same time resource and frequency resource utilizing different beams. In pattern 1, since the communication signal and the sensing signal are transmitted in a superimposed manner, the utilization rate of time-frequency resources may be effectively improved, and since transmission of the sensing signal does not occupy available frequency/time of the communication signal, the pattern 1 will not reduce communication performance, in particular compared with the conventional method of performing time-division/-frequency-division multiplexing of the sensing signal and the communication signal. Pattern 2 (i.e., the second pattern above) may be only the communication signal being transmitted utilizing a separate time-frequency resource. In pattern 2, available time-frequency resources of the transmitting end may all be used for transmission of the communication signal. In other words, in pattern 2, the sensing remains silent, that is, no sensing signal is transmitted. Pattern 3 (i.e., the third pattern above) may be only the sensing signal being transmitted utilizing a separate time-frequency resource. In pattern 3, available time-frequency resources of the transmitting end may all be used for transmission of the sensing signal. In other words, in pattern 3, the communication remains silent, that is, no communication signal is transmitted. Although three transmission patterns are illustrated in FIG. 7, the present disclosure is not limited to the listed transmission patterns. For example, there may also be a transmission pattern that transmits the communication signal and the sensing signal in a multiplexed manner utilizing different time-frequency resources.

According to the present disclosure, a transmitting end may indicate a transmission pattern implicitly or explicitly to a receiving end. For example, the transmitting end may transmit information indicating the transmission pattern to the receiving end. For another example, in the case of the transmission pattern being predetermined or by default, the transmitting end may implicitly indicate adopted transmission pattern to the receiving end while transmitting further information indicating the transmission pattern to the receiving end. For example, the control information related to transmission of the communication signal and the sensing signal may include duration information. In the case of explicitly indicating the transmission pattern, the duration information may be the duration of the indicated transmission pattern. Or, in the case of implicitly indicating the transmission pattern, the duration information may indicate one of the following information: the duration during which the communication signal and the sensing signal are transmitted using the same time-frequency resource, the duration during which only the communication signal is transmitted utilizing the separate time-frequency resource, and the duration during which only the sensing signal is transmitted utilizing the separate time-frequency resource. For example, in the case of determining in advance or adopting the default transmission pattern, the transmitting end may only transmit the duration information indicating the time that the predetermined or default transmission pattern will last to the receiving end, without explicitly transmitting the information indicating the transmission pattern. Or alternatively, the duration information may also indicate the duration that the predetermined or default transmission pattern will be suspended.

According to the present disclosure, duration of a transmission pattern may be indicated in any applicable time unit. For example, the duration information may indicate the number of time slots, the number of symbols, a specific time (e.g., seconds), and the like.

According to the present disclosure, a transmission pattern may be determined in advance (for example, a default transmission pattern may be specified in a relevant standard), or may be determined by a transmitting end or, in certain cases, by a control device and notified to a receiving end. For example, the transmission pattern is determined based at least on interference intensity from a utilized sensing beam to a communication signal. The following briefly introduces possible interference from a sensing beam to a communication signal.

Due to various factors such as sidelobe leakage, clutter noise, and multipath effects, a sensing signal may interfere with a communication signal to varying degrees. FIG. 8 schematically illustrates an example of interference from a sensing beam to a communication beam.

The box shown with hatching in FIG. 8 may represent one obstacle (e.g., a building, a mountain, etc.) in a multipath channel. After a sensing beam being refracted by the obstacle, multipath propagation of the sensing signal may occur. Depends on the refraction angle between the sensing beam and the obstacle, the refracted sensing signal may cause strong or weak interference to a communication signal. For example, the figure on the left of FIG. 8 illustrates a weak interference situation, and the figure on the right of FIG. 8 illustrates a strong interference situation. In addition, the sensing beam below the communication beam in FIG. 8 may also interfere with the communication signal due to sidelobe leakage, clutter noise, etc.

In general, since both the sensing beam and the communication beam are highly directional, the interference caused by sidelobe leakage and clutter noise is usually weak for most sensing beams. In addition, in general communication environments, situations where a sensing signal enters a communication receiving end through a stronger path due to the multipath effect are relatively rare. Therefore, interference from a sensing signal to a communication signal is generally weak, and only for a relatively short period of time or for a sensing beam in a specific direction, there is strong interference from the sensing signal to the communication signal.

In view of the above situation of the interference from the sensing beam to the communication beam, the transmitting end according to the present disclosure may classify a plurality of sensing beams (for example, a plurality of beams corresponding to the sensing scanning region described above) as strong interference sensing beams and weak interference sensing beams, and determine the transmission pattern for a weak interference sensing beam as the first pattern, and the transmitting end may determine the transmission pattern for a strong interference sensing beam as the second pattern or the third pattern further based on a priority between communication and sensing. For example, the priority may be related to the importance and urgency of the sensing service and the communication service. For example, in the case that the priority of the communication service is higher than that of the sensing service, the pattern for a strong interference sensing beam may be determined as the second pattern, and in the case that the priority of the sensing service is higher than that of the communication service, the pattern for a strong interference sensing beam may be determined as the third pattern. In particular, in the case that some of the plurality of beams corresponding to the sensing scanning region are strong interference beams, and the priority of the communication service is higher than that of the sensing service, it is possible to use the first pattern without utilizing the sensing beam determined to be a strong interference for sensing, that is, suspending sensing of the direction(s) corresponding to the strong interference beam(s) .

Specifically, for example, in the beam training phase, the receiving end may train each beam (including each communication beam and sensing beam) by measuring a reference signal (for example, a Synchronization Signal Block (SSB)), thereby obtaining the intensity gain of each beam. As such, the receiving end may classify a plurality of sensing beams as strong interference beams and weak interference beams according to an interference intensity threshold. For example, the interference intensity threshold may be a predetermined percentage of the intensity gain of the communication beam with the highest intensity measured by the receiving end. The receiving end may, for example, classify sensing beams whose intensity gains are higher than the interference intensity threshold as strong interference beams, and classify sensing beams whose intensity gains are equal to or lower than the interference intensity threshold as weak interference beams, and provide feedback to the transmitting end. In subsequent communications, the receiving end may provide feedback information related to interference intensities of the sensing beams to the transmitting end, and the transmitting end may dynamically adjust the classification of strong interference sensing beams and weak interference sensing beams according to the feedback information from the receiving end.

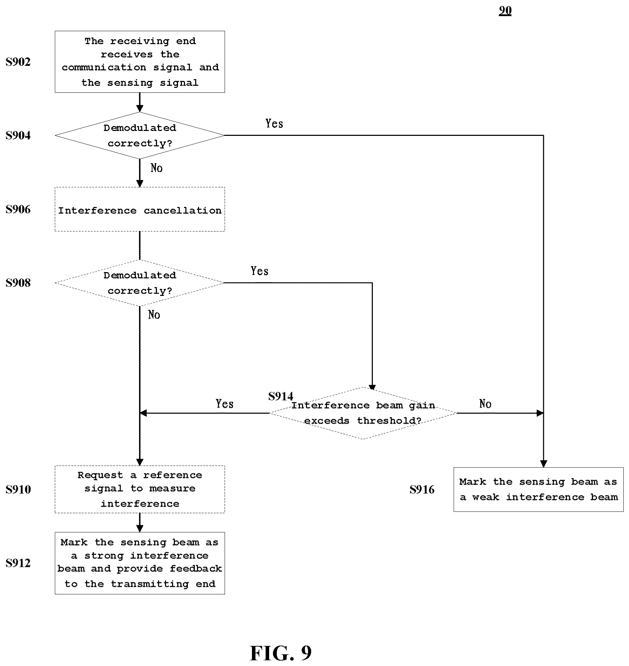

For example, the receiving end may perform the interference measurement and feedback method according to the present disclosure to determine interference intensity of the sensing beam to the communication beam, and provide feedback to the transmitting end when necessary. FIG. 9 illustrates an exemplary interference measurement and feedback method 90 according to the present disclosure.

As illustrated in FIG. 9, a receiving end first receives a communication signal and a sensing signal transmitted with pattern 1 in S902. In S904, the receiving end attempts to demodulate the communication signal directly without any additional processing. Here, "without any additional processing" may be understood as the receiving end directly demodulating the communication signal in accordance with conventional processing method in a non-integrated sensing and communication scenario, as if there is no sensing signal. If the receiving end has successfully demodulated the communication signal in S904, in S916, the receiving end may optionally mark the sensing beam corresponding to this transmission as a weak interference beam and provide feedback to a transmitting end. Alternatively, after successfully demodulating the communication signal, the receiving end may also only mark the interference intensity of the sensing beam without providing feedback to the transmitting end. In this case, the transmitting end keeps classifying the sensing beam as a weak interference beam in the case of not receiving feedback from the receiving end on the interference intensity of the sensing beam and not receiving feedback from the transmitting end on the reception failure of the communication signal.

If the receiving end fails to demodulate the communication signal in S904, the receiving end may mark the sensing beam corresponding to this transmission as a strong interference beam in S912 and provide feedback to the transmitting end. Optionally, the receiving end may perform interference cancellation on the received signal in S906. The specific interference cancellation method will be described in detail below. If the communication signal is still not correctly demodulated in S908 after interference cancellation, the receiving end may mark the sensing beam corresponding to this transmission as a strong interference beam in S912 and provide feedback to the transmitting end. In addition, optionally, the receiving end may also request reference signal(s) from the transmitting end in S910 to perform more accurate interference measurement. For example, the reference signal may be Channel State Information - Interference Measurement (CIS-IM). For example, the receiving end may determine the interference intensity from the sensing beam to the communication signal according to the CSI-IM interference measurement performed at S910, and based on the comparison between the measured interference intensity and a predetermined threshold, mark the sensing beam as strong interference (e.g., the interference intensity is greater than the predetermined threshold) or weak interference (e.g., the interference intensity is less than or equal to the predetermined threshold), and provide feedback to the transmitting end accordingly. For example, for more refined control, the predetermined threshold may preferably be less than the interference intensity threshold when the transmitting end initially classifies the sensing beam.

If the communication signal is correctly demodulated in S908 after the interference cancellation, preferably, the receiving end may decide in S914 whether the sensing beam gain obtained in the interference cancellation phase (for example, which may represent the interference intensity from the sensing beam to the communication signal) exceeds a predetermined threshold (for example, for more refined control, the predetermined threshold may preferably be less than the interference intensity threshold when the transmitting end initially classifies the sensing beam), and in the case that the sensing beam gain is greater than the predetermined threshold, perform step S912 described above and optionally perform step S910 described above before S912, and in the case that the sensing beam gain does not exceed the predetermined threshold, mark the sensing beam as a weak interference beam, and optionally provide feedback to the transmitting end.

By employing the interference measurement method 90 illustrated in FIG. 9, a weak interference sensing beam may be dynamically adjusted to a strong interference beam based on the feedback from the receiver. In addition, the receiver may also perform interference measurement by requesting reference signal(s) on sensing beams marked as strong interference periodically, semi-periodically or semi-continuously, so as to adjust these sensing beams to weak interference beams when the interference levels of these sensing beams change. For example, the reference signal may be CIS-IM. Alternatively, the receiver may also perform interference measurements on each sensing beam by requesting reference signal(s) (regardless of its interference intensity) periodically, semi-periodically or semi-continuously, so as to detect and feedback changes in interference levels of these sensing beams. For example, optional reference signal-based interference measurement may include interference power measurement that only measures interference power intensity, interference channel measurement that measures equivalent channels under interference beamforming, and so on.

In an integrated sensing and communication system of the present disclosure, switching of different transmission patterns may occur (for example, using different transmission patterns for different sensing beams). a special arrangement for the order of using transmission patterns (in other words, the scanning order of beams) can be considered, so as to avoid the increase of signaling overhead caused by too frequent switching of the transmission patterns. For example, the transmitting end may transmit the sensing signal utilizing a plurality of sensing beams corresponding to a plurality of directions in a scanning manner, and skip one or more sensing beams corresponding to the sensing signal to be transmitted with the third pattern in each round of scanning, and transmit the sensing signal with the third pattern utilizing the skipped one or more sensing beams after completing one time of downlink transmission for the communication signal.

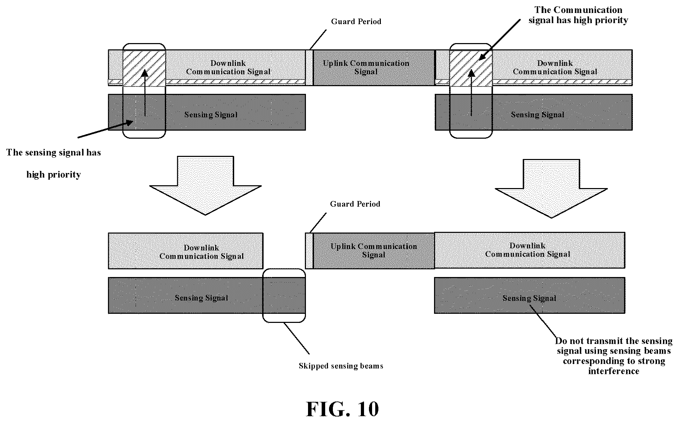

FIG. 10 schematically illustrates an exemplary arrangement of a scanning order for sensing beams according to an embodiment of the present disclosure. The upper part of FIG. 10 illustrates transmission patterns of a communication signal and a sensing signal in the case of a conventional scanning manner (i.e., scanning each beam of the sensing region in turn in a clockwise or counterclockwise direction). As shown in the upper part of FIG. 10, in the case that the sensing signal has a high priority and the sensing beam at the middle position of the scanning order has a strong interference to the communication signal, the transmitting end first needs to transmit with pattern 1, and when encountering a strong interference sensing beam, suspend transmission of the communication signal and switch to pattern 3 to only transmit the sensing signal, and then when the sensing beam becomes a weak interference beam, switch back to pattern 1 again to transmit both the communication signal and the sensing beam. Switching of the transmission pattern will cause extra signaling overhead and reduce communication efficiency. Moreover, when the strong interference sensing beams are not arranged in a clockwise or counterclockwise order, this switching will be more frequent, and even cause unacceptable signaling overhead and low communication efficiency. Therefore, it is considered to reschedule the scanning order of sensing beams that need to be transmitted with pattern 3.

For example, as shown in the lower part of FIG. 10, the transmitting end may skip one or more sensing beams corresponding to the sensing signal to be transmitted with pattern 3 in each round of scanning, and transmit the sensing signal with the third pattern utilizing the skipped one or more sensing beams after completing one time of downlink transmission for the communication signal (or, immediately before the next uplink communication). In actual implementation, one time of downlink transmission for communication signal may correspond to multiple rounds of scanning of the sensing region. In this case, the transmitting end may, according to actual needs, perform sensing by utilizing the skipped one or more sensing beams according to the total sensing duration corresponding to the previously skipped sensing beams before the next uplink communication. Or, the transmitting end may also perform sensing once in each direction corresponding to the skipped one or more sensing beams before the next uplink communication.

In addition, there is a situation where the communication signal has a high priority and the sensing beam at the middle position of the scanning order has strong interference to the communication signal. In this case, in addition to the processing method of transmitting only the communication signal utilizing the second pattern while suspending sensing, as illustrated in FIG. 10, the transmitting end may remain using the first pattern to transmit the communication signal and the sensing signal utilizing the same time-frequency resource, but does not transmit the sensing signal by utilizing sensing beams corresponding to strong interference. In other words, the transmitting end may continue to sense, but not in the direction that causes strong interference to the communication.

According to the present disclosure, when the first pattern is adopted to transmit a communication signal and a sensing signal utilizing a same time-frequency resource, it is necessary to take some measures to enable a receiving end to correctly demodulate the communication signal and/or the sensing signal from the received signal. According to one basic approach, a retransmission mechanism may be adopted to enable the receiving end to correctly receive the communication signal and/or the sensing signal. However, such retransmission mechanism may cause latency and thus affect achievable communication rate, and may cause a waste of power. Therefore, the present disclosure proposes a preferred interference cancellation method and a signal design method.

According to one preferred embodiment, a receiving end may demodulate a communication signal and/or a sensing signal from the received signal transmitted in the first pattern by performing an interference cancellation operation. For example, the receiving end may determine a communication signal that minimizes the noise of the received signal as the estimated communication signal. For example, the receiving end may jointly estimate a communication signal and a sensing beam gain from the received signal based at least on the estimated value of a communication beam gain and a sensing signal sequence. The receiving end may also additionally jointly estimate the communication signal and the sensing beam gain from the received signal based on at least one parameter. The at least one parameter may, for example, be at least one of the following parameters: a signal to interference ratio level, a signal format for a sensing beam, an initial value of a sensing beam gain for joint estimation, and the number of beams of a sensing signal. For example, one or more of the at least one parameter may be indicated by the above control information related to the transmission of the communication signal and the sensing signal, or may also be predetermined or determined by the receiving end.

An interference cancellation method according to one exemplary embodiment of the present disclosure will be introduced below.

Assuming that the length of a signal sequence transmitted by a transmitting end is $k$, the communication signal transmitted is $s^c = [s_1^c, s_2^c, ..., s_k^c]$, the sensing signal transmitted is $s^s = [s_1^s, s_2^s, ..., s_k^s]$, the signal received by a receiving end is $y = [y_1, y_2, ..., y_k]$, and the noise vector is $n = [n_1, n_2, ..., n_k]$, then the signal received by the receiving end y may be expressed as:

$$y = q^c s^c + q^s s^s + n,$$

wherein, the second item $q^s s^s$ is the sensing interference item.

In the above formula, the sensing signal sequence $s^s$ is generally a fixed sequence known to the receiving end (for example, a fixed sequence notified in advance by the transmitting end or predetermined). In addition, during a channel estimation process (for example, during the beam training phase), an estimated value $\hat{q}^c$ of the communication beam gain $q^c$ may be estimated (for example, depending on the specific estimation method, this may be estimated by the transmitting end or the receiving end, and in the case of being estimated by the transmitting end, the estimated value may be notified to the receiving end). In view of this, the receiving end may jointly estimate the communication signal $s^c$ and the sensing beam gain $q^s$ that minimize the noise $n$. The joint estimation of the communication signal-sensing beam gain may be expressed

as Formula 8:

$$\{\hat{s}^c, \hat{q}^s\} = argmin_{s^c, q^s} \ \|y - \hat{q}^c s^c - q^s s^s\|,$$

$$s.t. \qquad \hat{s}_i^c \in S, \ i = 1,2, \ldots, k \qquad \text{(Formula 8)}$$

In the above formula, S is a set of communication signal constellation points.

The receiving end may obtain the solution of the above formula by way of iterative optimization, for example. Specifically, the receiving end may set an initial value of the estimated sensing beam gain $\hat{q}^s$ to be $\hat{q}^s = 0$, and optimize $\hat{s}^c$, $\hat{q}^s$ alternately according to the following formulas 9 and 10, and stop iterating until $\hat{s}^c$ keeps unchanged:

$$\hat{s}^c = Proj_S \left( \frac{y - s^s \hat{q}^s}{\hat{q}^c} \right) \quad \text{(Formula 9)}$$

$$\hat{q}^s = (s^s)^\dagger (y - \hat{s}^c \hat{q}^c) \quad \text{(Formula 10)}$$

wherein $Proj_S(\cdot)$ represents projection to the set S element-by-element. When the iteration stops, the receiving end may obtain the estimated sensing beam gain $\hat{q}^s$ (as such, since the sensing signal sequence is known to the receiving end, the receiving end may estimate the sensing signal based on the estimated sensing beam gain $\hat{q}^s$) and the estimated communication signal $\hat{s}^c$.

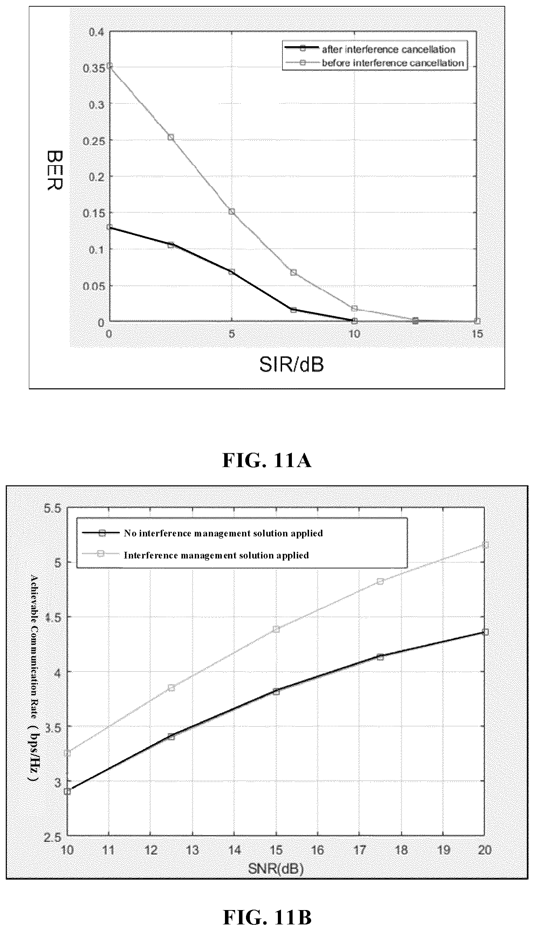

By means of the interference cancellation method according to the present disclosure, the receiving end may advantageously improve the signal to interference ratio gain of the communication signal and the sensing signal. FIG. 11A illustrates a performance simulation diagram of an interference cancellation method according to the present disclosure. In the simulation of FIG. 11A, the communication signal is set to 64QAM modulation, the length of the signal sequence is 32, and the signal to noise ratio is 20dB. As illustrated in FIG. 11A, under different levels of interference from the sensing signal to the communication signal as shown on the horizontal axis (shown in the figure as the Signal to Interference Ratio (SIR)), application of the interference method according to the present disclosure may reduce the Bit Error Ratio (BER) of the communication signal and may provide a signal to interference ratio gain of about 2.5dB.

In the exemplary interference cancellation method described above, the receiving end demodulates the communication signal from the received signal based on the communication beam gain as the interference cancellation parameter. Additionally, the receiving end may further perform interference cancellation based on at least one of the following parameters: a signal to interference ratio level (for example, the receiving end may select an initial value of $\hat{q}^s$ based on the signal to interference ratio level), a signal format for the sensing beam (for example, the receiving end may determine the sensing sequence $s^s$ based on the signal format for the sensing beam), an initial value of the sensing beam gain for joint estimation, and the number of beams of the sensing signal (for example, in the case that the transmitting end has a plurality of independent radio frequency modules while utilizing a plurality of beams for transmission, the receiving end may determine a matrix representing the sensing signal sequence $s^s$ based on this). For example, at least some of these parameters may be transmitted by the transmitting end to the receiving end, for example, as part of the control information related to the transmission of the communication signal and the sensing signal described above. Alternatively, at least some of these parameters may also be predetermined or determined in advance by the receiving end.

According to one preferred embodiment, a transmitting end may perform a joint design of a sensing signal and a communication signal, such that a receiving end is able to directly demodulate the communication signal and/or the sensing signal from the received signal.

For example, the transmitting end may design the sensing signal to be a signal orthogonal to the communication signal. For example, the transmitting end may design the sensing signal orthogonal to the communication signal by any appropriate method.

For another example, the sensing signal may be designed to be associated with the communication signal, such that through adjustment of the sensing signal, the signal power gain of the communication signal received by the receiving end can be increased. Formula 11 is a design method for the sensing signal $s^s$ according to one exemplary embodiment of the present disclosure.

$$s^s = \sqrt{\delta} \ \hat{q}^c s^c (\hat{q}^s)^H \qquad \text{(Formula 11)}$$

wherein, $\delta$ is the power factor, $\hat{q}^c$ is an estimated value of the communication beam gain, $s^c$ is the communication signal, and $\hat{q}^s$ is an estimated value of the sensing signal beam gain, wherein, the estimated value $\hat{q}^c$ of the communication beam gain and the estimated value $\hat{q}^s$ of the sensing beam gain may be estimated during the channel estimation process (e.g., during the beam training phase). For example, depending on the specific estimation method, this may be estimated by the transmitting end or the receiving end, and in the case of estimating by the receiving end, the estimated value may be notified to the transmitting end.

Based on the above formula, the signal received by the receiving end may be approximately expressed as formula 12:

$$y \approx \hat{q}^c s^c \left(1 + \sqrt{\delta}|\hat{q}^s|^2\right) + n \quad \text{(Formula 12)}$$

Therefore, based on the sensing signal designed according to Formula 12, the receiving end may obtain a signal power gain $\left(1 + \sqrt{\delta}|\hat{q}^s|^2\right)$. Therefore, by adjusting the sensing signal, in particular adjusting $\delta$, the diversity gain at the receiving end can be obtained, in turn, the communication signal can be directly demodulated from the received signal.

According to the present disclosure, interference cancellation performed by the receiving end may be used in combination with the sensing signal design performed by the transmitting end. For example, the receiving end may design the sensing signal based on the communication signal, and at the same time, when the receiving end still cannot directly demodulate the communication signal from the designed signal, the received signal may be subjected to interference cancellation in order to demodulate the communication signal.

According to the present disclosure, for a sensing beam determined as weak interference, preferably, the communication signal can be demodulated by interference cancellation operations by the receiving end, and for a sensing beam determined as strong interference, preferably, the sensing signal design can be performed by the transmitting end such that the receiving end is able to demodulate the communication signal. However, the present disclosure is not limited to this. For example, the sensing signal design may also be applied to a sensing beam with weak interference, and for a sensing beam with strong interference, demodulation can be attempted by the receiving end through interference cancellation operations without designing the sensing signal. In addition, in the case of adopting the first pattern to transmit the sensing signal and the communication signal, how the receiving end specifically receives and demodulates the signals may be agreed in advance/by default, indicated by the transmitter, or determined autonomously by the receiver.

FIG. 11B illustrates a performance simulation diagram of an example of an interference management solution according to the present disclosure. In the interference management solution, the interference cancellation method is applied to weak interference sensing beams, and the joint signal design method is applied to strong interference sensing beams. In the simulation of FIG. 11B, the communication signal is set to 64QAM modulation, the length of the signal sequence is 32, the signal to interference ratio corresponding to the weak interference sensing beams is 15dB, and the signal to interference ratio corresponding to the strong interference sensing beams is 5dB. In the case that the interference management solution according to the present disclosure is not applied, when the communication signal fails to be demodulated, the system needs to use a retransmission mechanism to enable the receiving end to successfully receive the communication data, while the retransmission may cause a decrease in achievable communication rate. As illustrated in FIG. 11B, compared with the case that the interference management solution according to the present disclosure is not applied, the interference management solution according to the preferred embodiment of the present disclosure may significantly improve the achievable communication rate of the integrated sensing and communication system (as shown in the figure, 10%-15%), thereby significantly improving the performance of the integrated sensing and communication system.

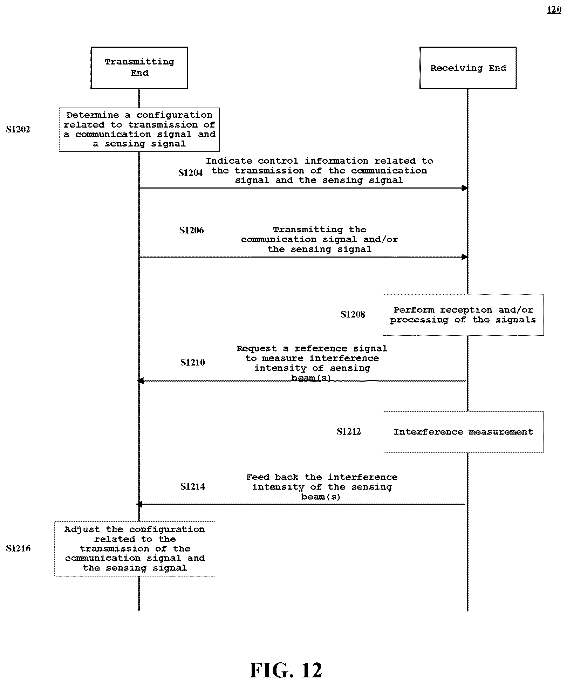

The implementation details of the integrated sensing and communication system according to the present disclosure have been described. Referring to FIG. 12, the following describes an exemplary information interaction 120 between a transmitting end and a receiving end of an integrated sensing and communication system according to the present disclosure.

As illustrated in FIG. 12, at S1202, the transmitting end may first determine a configuration related to transmission of a communication signal and a sensing signal. For example, the transmitting end may determine a sensing beam configuration, respective initially determined interference intensities of a plurality of sensing beams to be scanned corresponding to a sensing region, a transmission pattern of the communication signal and the sensing signal, the duration of the transmission pattern, and the like. Subsequently, at S1204, the transmitting end may indicate control information related to the transmission of the communication signal and the sensing signal to the receiving end. For example, the control information may be information indicating the sensing beam configuration. For example, the control information may be at least one of configurations related to the transmission of the communication signal and the sensing signal determined by the transmitting end. For example, the transmitting end may explicitly transmit at least a part of the control information to the receiving end. In addition, at least a part of the control information may also be implicitly indicated, for example, based on an agreement between the transmitting end and the receiving end, based on provisions in relevant standards, and the like. At S1206, the transmitting end may, for example, transmit the communication signal and/or the sensing signal based on the configuration related to the transmission of the communication signal and the sensing signal determined at S1202.

Next, at S1208, the receiving end may perform reception and/or processing of the signal. For example, the receiving end may determine how to perform reception and/or processing of the signals based at least on the control information indicated by the transmitting end. For example, in the case the transmission pattern being the second pattern, the receiving end may directly receive the communication signal. For example, in the case of the transmission pattern being the third pattern, the receiving end decides whether the sensing signal is directed to itself while actively participating in the sensing, and directly receives the sensing signal in the case of affirmative. In addition, in the case of the transmission pattern being the third pattern, if the receiving end does not actively sense, or the sensing signal is not directed to itself, the receiving end may not perform reception of the sensing signal. For example, in the case of the transmission pattern being the first pattern, the receiving end may perform processing of the received information, for example, either in a default processing manner or in a manner indicated by the transmitting end, thereby demodulating the communication signal and/or the sensing signal. For example, this processing method may be direct demodulation (for example, in the case of the sensing signal design based on the communication signal being performed by the transmitting end), or may be performing interference cancellation, or may be direct demodulation first and then, in the case of unsuccessful demodulation, performing interference cancellation, or may be performing interference cancellation for beams marked as weak interference while performing direct demodulation for beams marked as strong interference (for example, the transmitting end may have performed communication-signal-based design only for sensing beams with strong interference), and any other applicable methods (for example, requesting retransmission in the case of failure to correctly demodulate the communication signal and/or the sensing signal). In addition, in the case of the receiving end participating in sensing, the receiving end may also perform processing of the received sensing signal to obtain sensing information, and report the obtained sensing information to a control device of the wireless network (or, further report it to the network element responsible for sensing in the core network via the control device) for further processing, if necessary.

During reception/processing of the signals or periodically, the receiving end may perform measurement on interference from the sensing signal to the communication signal (e.g., at S1212). For example, the measurement may be implemented, for example, during interference cancellation (e.g., by estimating the sensing beam gain), or the measurement may be performed by requesting a reference signal (e.g., at S1210). Based on the measurement result, the receiving end may feed back interference intensity of the sensing beam to the transmitting end at S1214. For example, the receiving end may feed back the specific value of the interference intensity directly, or the receiving end may also feed back to the transmitting end an indication of whether the sensing beam is a weak interference beam or a strong interference beam after comparing the interference intensity with a predetermined threshold.

At S1216, the transmitting end may adjust the configuration related to the transmission of the communication signal and the sensing signal. For example, such adjustment may be based on the change of the priority of the communication service and the sensing service, the change of the interference intensity of the sensing beam fed back by the receiving end, and so on.

It should be understood that FIG. 12 is only a schematic information interaction process. The order of operations in the process is not necessarily fixed. For example, the operation at S1210 may also be performed periodically, semi-periodically or semi-continuously. The operations at S1212 and S1214 may also be performed almost synchronously with S1208. In addition, not all operations in the process are necessary. For example, the operation at S1204 may be replaced by an implicit indication in certain cases. For another example, the operations at S1210, S1212, S1214 and S1216 may all be optional operations. In addition, the process may also involve other operations. For example, the receiving end may additionally transmit sensing results to the transmitting end.

The present disclosure has been described in detail above with reference to the accompanying drawings. The solution of the present disclosure advantageously provides an integrated sensing and communication system that enables effective combination of communication and sensing. According to the present disclosure, the communication module may share hardware, waveform signals, etc. with the sensing module, thereby saving hardware resources and spectrum overhead and improving system performance. The present disclosure provides a variety of optional patterns for transmission of communication signals and sensing signals, such that the most appropriate transmission pattern may be selected according to actual needs. According to the present disclosure, even if the same time-frequency resource is used to transmit a communication signal and a sensing signal, the interference from the sensing signal to the communication signal may be effectively reduced, canceled or avoided, such that the receiving end may perform correct demodulation. Application of the method of overcoming the interference from the sensing signal to the communication signal in the present disclosure can reduce the number of retransmissions, thereby improving achievable communication rate and reducing power waste.

It should be understood that machine-executable instructions in a machine-readable storage medium or program product according to embodiments of the present disclosure may be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

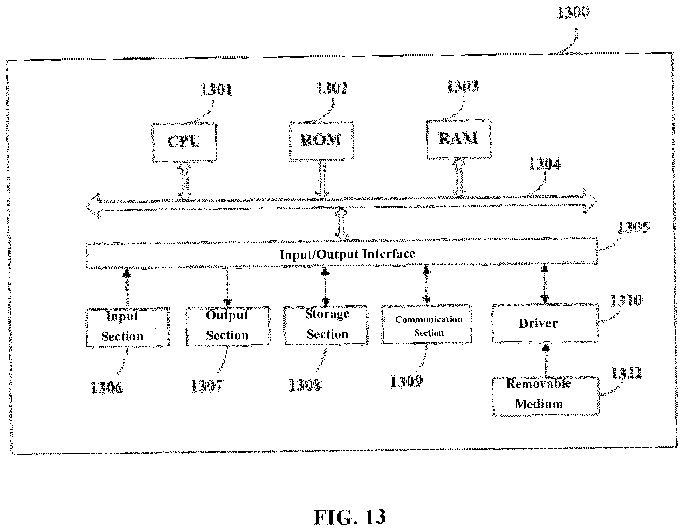

In addition, it should be understood that the series of processes and devices described above may also be implemented by software and/or firmware. In the case of being implemented by software and/or firmware, a program constituting the software is installed from a storage medium or a network to a computer having a dedicated hardware structure, for example, a general-purpose personal computer 1300 shown in FIG. 13, which, when installed with various programs, can perform various functions and the like. FIG. 13 is a block diagram showing an example structure of a personal computer as an information processing device that may be employed in an embodiment of the present disclosure. In one example, the personal computer may correspond to the above exemplary terminal device according to the present disclosure.

In FIG. 13, a central processing unit (CPU) 1301 executes various processes according to a program stored in a read only memory (ROM) 1302 or a program loaded from a storage section 1308 to a random-access memory (RAM) 1303. In the RAM 1303, data required when the CPU 1301 executes various processes and the like is also stored as necessary.

The CPU 1301, ROM 1302, and RAM 1303 are connected to each other via a bus 1304. The input/output interface 1305 is also connected to the bus 1304.

The following components are connected to the input/output interface 1305: an input section 1306 including a keyboard, a mouse, etc.; an output section 1307 including a display such as a cathode ray tube (CRT), a liquid crystal display (LCD), etc., and a speaker, etc.; a storage section 1308, including a hard disk, etc.; and a communication section 1309, including a network interface card such as a LAN card, a modem, and the like. The communication section 1309 performs communication processing via a network such as the Internet.

A driver 1310 is also connected to the input/output interface 1305 as needed. A removable medium 1311 such as a magnetic disk, an optical disk, a magneto-optical disk, a semiconductor memory, and the like is mounted on the drive 1310 as needed, so that a computer program read therefrom is installed into the storage section 1308 as needed.

In the case that the series of processing described above is implemented by software, a program constituting the software is installed from a network such as the Internet or a storage medium such as a removable medium 1311.

Those skilled in the art should understand that such a storage medium is not limited to the removable medium 1311 shown in FIG. 13 in which a program is stored and distributed separately from the device to provide the program to the user. Examples of the removable medium 1311 include a magnetic disk (including a floppy disk (registered trademark)), an optical disk (including a compact disk read-only memory (CD-ROM) and a digital versatile disk (DVD)), a magneto-optical disk (including a mini disc (MD) (registered trademark)) and a semiconductor memory. Alternatively, the storage medium may be the ROM 1302, a hard disk contained in the storage section 1308, or the like, in which programs are stored and distributed to users together with devices containing them.

The techniques of the present disclosure can be applied to various products.

For example, the electronic device 10 and the electronic device 20 according to the embodiments of the present disclosure may be implemented as or included in various control devices/base stations. For example, the electronic device 10 and the electronic device 20 according to the embodiments of the present disclosure may also be implemented as or included in various terminal devices/user devices.

For example, the control device/base station mentioned in this disclosure may be implemented as any type of base station, e.g., an evolved Node B (gNB), such as a macro gNB and a small gNB. The small gNB may be a gNB covering a cell smaller than a macro cell, such as a pico gNB, a micro gNB, and a home (femto) gNB. Alternatively, the base station may be implemented as any other type of base station, such as a NodeB and a Base Transceiver Station (BTS). The base station may include: a body (also referred to as a base station device) configured to control wireless communication; and one or more Remote Radio Heads (RRHs) disposed at a different place from the body. In addition, various types of terminals to be described below may each operate as a base station by temporarily or semi-permanently performing base station functions.

For example, the terminal device mentioned in this disclosure, also referred to as a user device in some examples, may be implemented as a mobile terminal (such as a smart phone, a tablet personal computer (PC), a notebook PC, a portable game terminal, a portable/dongle type mobile router and a digital camera) or a vehicle-mounted terminal (such as a car navigation device). The user device may also be implemented as a terminal performing machine-to-machine (M2M) communication (also referred to as a machine type communication (MTC) terminal). In addition, the user device may be a wireless communication module (such as an integrated circuit module including a single wafer) mounted on each of the above terminals.

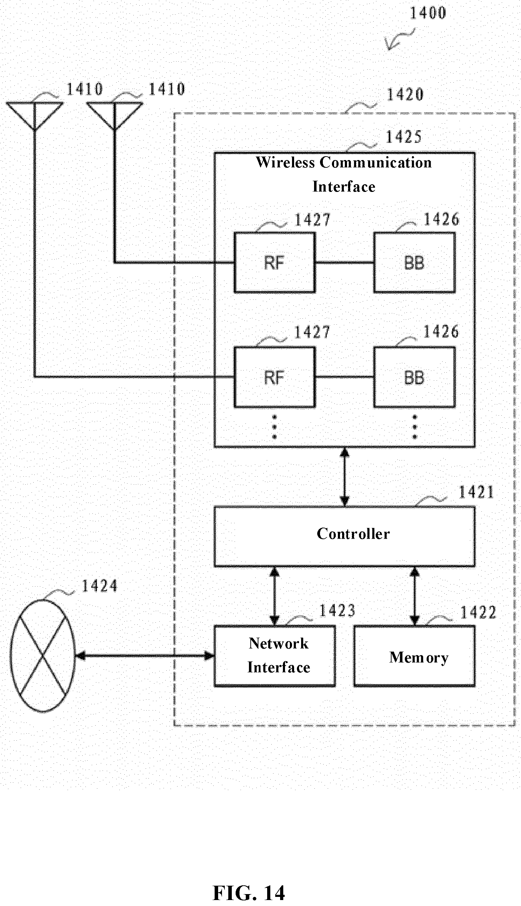

Examples according to the present disclosure will be described below with reference to FIGS. 14 to 17.

[Examples about Base Stations]

It should be understood that the term base station in this disclosure has its full breadth of ordinary meaning and at least includes a wireless communication station used as part of a wireless communication system or a radio system to facilitate communication. Examples of base stations may be, for example but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, may be an gNB, eLTE eNB, etc. appearing in a 5G communication system, or may be a corresponding network node in a future communication system. Part of the functions in the base stations of the present disclosure may also be implemented as an entity that has control functions for communication in D2D, M2M and V2V communication scenarios, or as an entity that plays a spectrum coordination role in cognitive radio communication scenarios.

First Example

FIG. 14 is a block diagram showing a first example of a schematic configuration of a gNB to which the technology of the present disclosure may be applied. The gNB 1400 includes multiple antennas 1410 and a base station device 1420. The base station device 1420 and each antenna 1410 may be connected to each other via an RF cable. In one implementation, the gNB 1400 (or the base station device 1420) here may correspond to the above electronic device 10 and/or the electronic device 80.

Each of the antennas 1410 includes a single or multiple antenna elements (such as multiple antenna elements included in a Multiple Input Multiple Output (MIMO) antenna), and is used by the base station device 1420 to transmit and receive wireless signals. As shown in FIG. 14, the gNB 1400 may include multiple antennas 1410. For example, the multiple antennas 1410 may be compatible with multiple frequency bands used by the gNB 1400.

The base station device 1420 includes a controller 1421, a memory 1422, a network interface 1423 and a wireless communication interface 1425.

The controller 1421 may be, for example, a CPU or a DSP, and operates various functions of a higher layer of the base station device 1420. For example, the controller 1421 generates a data packet according to data in a signal processed by the wireless communication interface 1425 and transfers the generated packet via the network interface 1423. The controller 1421 may bundle data from a plurality of baseband processors to generate a bundled packet, and transfer the generated bundled packet. The controller 1421 may have logic functions to perform controls such as radio resource control, radio bearer control, mobility management, admission control and scheduling. These controls may be performed in conjunction with nearby gNBs or core network nodes. The memory 1422 includes RAM and ROM, and stores programs executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or further gNB via the network interface 1423. In this case, the gNB 1400 and core network nodes or other gNBs may be connected to each other through logical interfaces (such as S1 interface and X2 interface). The network interface 1423 may also be a wired communication interface or a wireless communication interface for wireless backhaul. If the network interface 1423 is a wireless communication interface, the network interface 1923 may use a higher frequency band for wireless communication than that used by the wireless communication interface 1425.

The wireless communication interface 1425 supports any cellular communication scheme (such as Long-Term Evolution (LTE) and LTE-Advanced), and provides a wireless connection to a terminal located in a cell of the gNB 1400 via the antenna 1410. The wireless communication interface 1425 may generally include, for example, a baseband (BB) processor 1426 and an RF circuit 1427. The BB processor 1426 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1421, the BB processor 1426 may have part or all of the logic functions described above. The BB processor 1426 may be a memory storing a communication control program, or a module including a processor and related circuits configured to execute the program. Updating the program may cause the functionality of the BB processor 1426 to change. The module may be a card or a blade inserted into a slot of the base station device 1420. Alternatively, the module may also be a chip mounted on a card or blade. Meanwhile, the RF circuit 1427 may include, for example, a mixer, a filter, and an amplifier, and transmit and receive wireless signals via the antenna 1410. Although FIG. 14 illustrates an example in which one RF circuit 1427 is connected to one antenna 1410, the present disclosure is not limited to this, instead, one RF circuit 1427 may be connected to multiple antennas 1410 at the same time.

As shown in FIG. 14, the wireless communication interface 1425 may include multiple BB processors 1426. For example, the multiple BB processors 1426 may be compatible with multiple frequency bands used by the gNB 1400. As shown in FIG. 14, the wireless communication interface 1425 may include multiple RF circuits 1427. For example, the multiple RF circuits 1427 may be compatible with multiple antenna elements. Although FIG. 14 illustrates an example in which the wireless communication interface 1425 includes multiple BB processors 1426 and multiple RF circuits 1427, the wireless communication interface 1425 may also include a single BB processor 1426 or a single RF circuit 1427.

Second Example

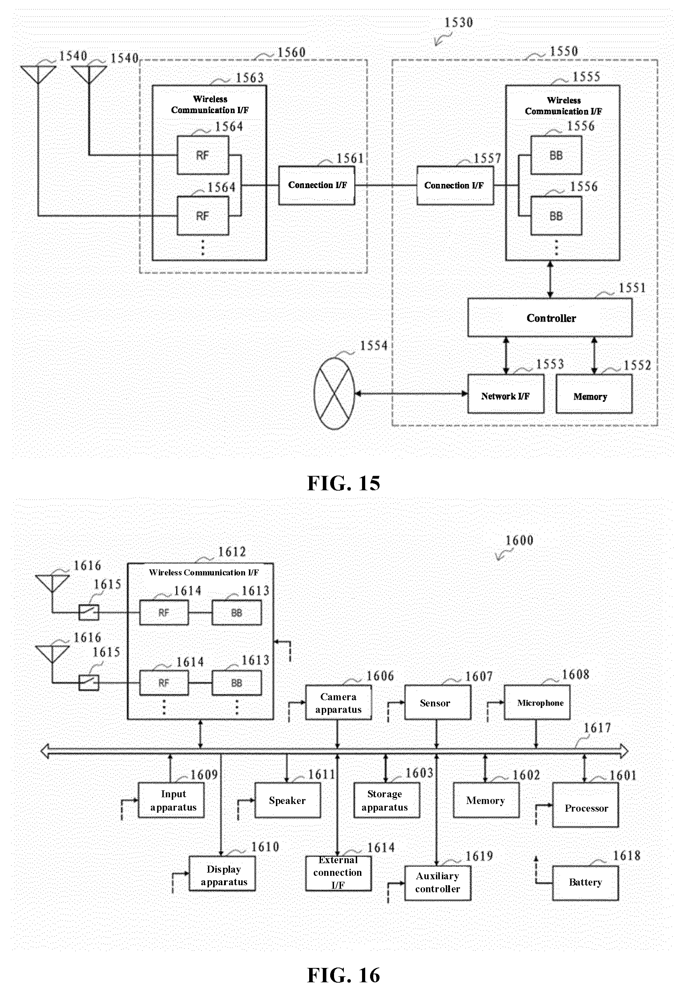

FIG. 15 is a block diagram showing a second example of a schematic configuration of a gNB to which the technology of the present disclosure may be applied. The gNB 1530 includes multiple antennas 1540, a base station device 1550 and a RRH 1560. The RRH 1560 and each antenna 1540 may be connected to each other via RF cables. The base station device 1550 and the RRH 1560 may be connected to each other via a high-speed line such as an optical fiber cable. In one implementation, the gNB 1530 (or the base station device 1550) here may correspond to the above electronic device 50 and/or 100.

Each of the antennas 1540 includes a single or multiple antenna elements (such as multiple antenna elements included in a MIMO antenna), and is used by the RRH 1560 to transmit and receive wireless signals. As shown in FIG. 15, the gNB 1530 may include multiple antennas 1540. For example, the multiple antennas 1540 may be compatible with multiple frequency bands used by the gNB 1530.

The base station device 1550 includes a controller 1551, a memory 1552, a network interface 1553, a wireless communication interface 1555 and a connection interface 1557. The controller 1551, the memory 1552, and the network interface 1553 are the same as the controller 1421, the memory 1422, and the network interface 1423 described with reference to FIG. 14.

The wireless communication interface 1555 supports any cellular communication scheme (such as LTE and LTE-Advanced), and provides wireless communication to terminals located in a sector corresponding to the RRH 1560 via the RRH 1560 and the antenna 1540. The wireless communication interface 1555 may generally include, for example, a BB processor 1556. The BB processor 1556 is the same as the BB processor 1426 described with reference to FIG. 14, except that the BB processor 1556 is connected to the RF circuit 1564 of the RRH 1560 via the connection interface 1557. As shown in FIG. 15, the wireless communication interface 1555 may include multiple BB processors 1556. For example, the multiple BB processors 1556 may be compatible with multiple frequency bands used by the gNB 1530. Although FIG. 15 illustrates an example in which the wireless communication interface 1555 includes multiple BB processors 1556, the wireless communication interface 1555 may also include a single BB processor 1556.

The connection interface 1557 is an interface for connecting the base station device 1550 (the wireless communication interface 1555) to the RRH 1560. The connection interface 1557 may also be a communication module for communication in the above high-speed line connecting the base station device 1550 (the wireless communication interface 1555) to the RRH 1560.

The RRH 1560 includes a connection interface 1561 and a wireless communication interface 1563.

The connection interface 1561 is an interface for connecting the RRH 1560 (the wireless communication interface 1563) to the base station device 1550. The connection interface 1561 may also be a communication module for communication in the above high-speed line.

The wireless communication interface 1563 transmits and receives wireless signals via the antenna 1540. The wireless communication interface 1563 may generally include an RF circuit 1564, for example. The RF circuit 1564 may include, for example, a mixer, a filter, and an amplifier, and transmits and receives wireless signals via the antenna 1540. Although FIG. 15 illustrates an example in which one RF circuit 1564 is connected to one antenna 1540, the present disclosure is not limited to this, instead, one RF circuit 1564 may be connected to multiple antennas 1540 at the same time.

As shown in FIG. 15, the wireless communication interface 1563 may include multiple RF circuits 1564. For example, the multiple RF circuits 1564 may support multiple antenna elements. Although FIG. 15 illustrates an example in which the wireless communication interface 1563 includes multiple RF circuits 1564, the wireless communication interface 1563 may also include a single RF circuit 2064.

[Example about User Devices]

First Example

FIG. 16 is a block diagram showing an example of a schematic configuration of a smart phone 1600 to which the technology of the present disclosure may be applied. The smart phone 1600 includes a processor 1601, a memory 1602, a storage apparatus 1603, an external connection interface 1604, a camera apparatus 1606, a sensor 1607, a microphone 1608, an input apparatus 1609, a display apparatus 1610, a speaker 1611, a wireless communication interface 1612, one or more antenna switches 1615, one or more antennas 1616, a bus 1617, a battery 1618, and an auxiliary controller 1619. In one implementation, the smart phone 1600 (or the processor 1601) here may correspond to the above electronic device 50 and/or electronic device 100.

The processor 1601 may be, for example, a CPU or a system on chip (SoC), and controls functions of an application layer and further layers of the smart phone 1600. The memory 1602 includes RAM and ROM, and stores data and programs executed by the processor 1601. The storage apparatus 1603 may include a storage medium such as a semiconductor memory and a hard disk. The external connection interface 1604 is an interface for connecting an external apparatus (such as a memory card and a universal serial bus (USB) apparatus) to the smart phone 1600.

The camera apparatus 1606 includes an image sensor (such as a charge coupled device (CCD) and a complementary metal oxide semiconductor (CMOS)), and generates captured images. The sensor 1607 may include a set of sensors, such as a measurement sensor, a gyro sensor, a geomagnetic sensor, and an acceleration sensor. The microphone 1608 converts sound input to the smart phone 1600 into an audio signal. The input apparatus 1609 includes, for example, a touch sensor configured to detect a touch on the screen of the display apparatus 1610, a keypad, a keyboard, a button, or a switch, and receives operations or information input from a user. The display apparatus 1610 includes a screen (such as a liquid crystal display (LCD) and an organic light emitting diode (OLED) display), and displays an output image of the smart phone 1600. The speaker 1611 converts an audio signal output from the smart phone 1600 into sound.

The wireless communication interface 1612 supports any cellular communication scheme (such as LTE and LTE-Advanced), and performs wireless communication. The wireless communication interface 1612 may generally include, for example, a BB processor 1613 and an RF circuit 1619. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmit and receive wireless signals via the antenna 1616. The wireless communication interface 1612 may be a chip module on which a BB processor 1613 and an RF circuit 1614 are integrated. As shown in FIG. 16, the wireless communication interface 1612 may include multiple BB processors 1613 and multiple RF circuits 1614. Although FIG. 16 illustrates an example in which the wireless communication interface 1612 includes multiple BB processors 1613 and multiple RF circuits 1614, the wireless communication interface 1612 may include a single BB processor 1613 or a single RF circuit 1614.

Furthermore, the wireless communication interface 1612 may support another type of wireless communication scheme, such as a short-range wireless communication scheme, a near field communication scheme, and a wireless local area network (LAN) scheme, in addition to the cellular communication schemes. In this case, the wireless communication interface 1612 may include a BB processor 1613 and an RF circuit 1614 for each wireless communication scheme.

Each of the antenna switches 1615 switches the connection destination of the antenna 1616 among a plurality of circuits (e.g., circuits for different wireless communication schemes) included in the wireless communication interface 1612.

Each of the antennas 1616 includes a single or multiple antenna elements (such as multiple antenna elements included in a MIMO antenna), and is used for the wireless communication interface 1612 to transmit and receive wireless signals. As shown in FIG. 16, the smart phone 1600 may include multiple antennas 1616. Although FIG. 16 shows an example in which the smart phone 1600 includes multiple antennas 1616, the smart phone 1600 may also include a single antenna 1616.

In addition, the smart phone 1600 may include an antenna 1616 for each wireless communication scheme. In this case, the antenna switch 1615 may be omitted from the configuration of the smart phone 1600.

The bus 1617 connects the processor 1601, the memory 1602, the storage apparatus 1603, the external connection interface 1604, the camera apparatus 1606, the sensor 1607, the microphone 1608, the input apparatus 1609, the display apparatus 1610, the speaker 1611, the wireless communication interface 1612, and the auxiliary controller 1619 to each other. The battery 1618 provides power to the various blocks of the smart phone 1600 shown in FIG. 16 via feed lines, which are partially shown as dashed lines in the figure. The auxiliary controller 1619 operates minimum necessary functions of the smart phone 1600, for example, in a sleep mode.

Second Example

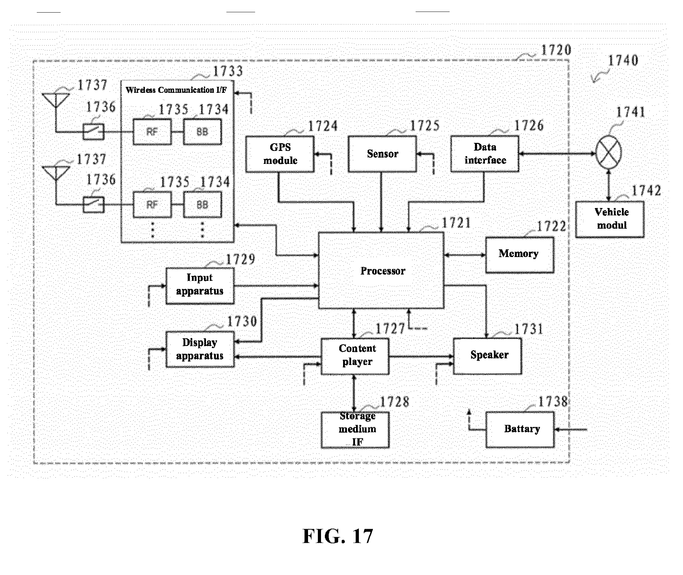

FIG. 17 is a block diagram showing an example of a schematic configuration of a car navigation device 1720 to which the technology of the present disclosure may be applied. The car navigation device 1720 includes a processor 1721, a memory 1722, a global positioning system (GPS) module 1724, a sensor 1725, a data interface 1726, a content player 1727, a storage medium interface 1728, an input apparatus 1729, a display apparatus 1730, a speaker 1731, a wireless communication interface 1733, one or more antenna switches 1736, one or more antennas 1737, and a battery 1738. In one implementation, the car navigation device 1720 (or the processor 1721) here may correspond to the above electronic device 50 and/or electronic device 100.

The processor 1721 may be, for example, a CPU or a SoC, and controls a navigation function and other functions of the car navigation device 1720. The memory 1722 includes RAM and ROM, and stores data and programs executed by the processor 1721.

The GPS module 1724 measures the location (such as latitude, longitude, and altitude) of the car navigation device 1720 using GPS signals received from GPS satellites. The sensor 1725 may include a set of sensors such as a gyro sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in storage medium (such as a CD and a DVD), which is inserted into the storage medium interface 1728. The input apparatus 1729 includes, for example, a touch sensor configured to detect a touch on the screen of the display apparatus 1730, a button, or a switch, and receives operations or information input from a user. The display apparatus 1730 includes a screen such as an LCD or OLED display, and displays an image of a navigation function or reproduced content. The speaker 1731 outputs sound of the navigation function or reproduced content.

The wireless communication interface 1733 supports any cellular communication scheme (such as LTE and LTE-Advanced), and performs wireless communication. The wireless communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The wireless communication interface 1733 may also be a chip module on which the BB processor 1734 and the RF circuit 1735 are integrated. As shown in FIG. 17, the wireless communication interface 1733 may include multiple BB processors 1734 and multiple RF circuits 1735. Although FIG. 17 illustrates an example in which the wireless communication interface 1733 includes multiple BB processors 1734 and multiple RF circuits 1735, the wireless communication interface 1733 may also include a single BB processor 1734 or a single RF circuit 1735.

Furthermore, the wireless communication interface 1733 may support another type of wireless communication scheme, such as a short-range wireless communication scheme, a near field communication scheme, and a wireless LAN scheme, in addition to the cellular communication schemes. In this case, the wireless communication interface 1733 may include the BB processor 1734 and the RF circuit 1735 for each wireless communication scheme.

Each of the antenna switches 1736 switches the connection destination of the antenna 1737 among a plurality of circuits (such as circuits for different wireless communication schemes) included in the wireless communication interface 1733.

Each of the antennas 1737 includes a single or multiple antenna elements (such as multiple antenna elements included in a MIMO antenna), and is used for the wireless communication interface 1733 to transmit and receive wireless signals. As shown in FIG. 17, the car navigation device 1720 may include multiple antennas 1737. Although FIG. 17 illustrates an example in which the car navigation device 1720 includes multiple antennas 1737, the car navigation device 1720 may also include a single antenna 1737.

Furthermore, the car navigation device 1720 may include an antenna 1737 for each wireless communication scheme. In this case, the antenna switch 1736 may be omitted from the configuration of the car navigation device 1720.

The battery 1738 provides power to various blocks of the car navigation device 1720 shown in FIG. 17 via feeder lines, which are partially shown as dashed lines in the figure. The battery 1738 accumulates electric power supplied from the vehicle.

The technology of the present disclosure may also be implemented as an in-vehicle system (or vehicle) 1740 including one or more blocks of the car navigation device 1720, the in-vehicle network 1741, and the vehicle module 1742. The vehicle module 1742 generates vehicle data (such as vehicle speed, engine speed, and fault information), and outputs the generated data to the in-vehicle network 1741.

The exemplary embodiments of the present disclosure have been described above with reference to the accompanying drawings, but the present disclosure is of course not limited to the above examples. Those skilled in the art may find various alterations and modifications within the scope of the appended claims, and it should be understood that these alterations and modifications will naturally fall within the technical scope of the present disclosure.

It should be understood that machine-executable instructions in a machine-readable storage medium or program product according to embodiments of the present disclosure may be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, a floppy disk, an optical disk, a magneto-optical disk, a memory card, a memory stick, and the like.

In addition, it should be understood that the series of processes and devices described above may also be implemented by software and/or firmware. In the case of being implemented by software and/or firmware, corresponding programs constituting corresponding software are stored in a storage medium of a relevant device (for example, the memory 104 or 204 of the electronic device 10 shown in FIG. 5, the electronic device 20 shown in FIG. 6), which, when executed, can perform various functions.

For example, a plurality of functions included in one unit in the above embodiments may be implemented by separate apparatus. Alternatively, the plurality of functions implemented by multiple units in the above embodiments may be implemented by separate apparatus, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order may be appropriately changed.

Although the present disclosure and its advantages have been described in detail, it should be understood that various changes, substitutions and alterations may be made herein without departing from the spirit and scope of the disclosure as defined by the appended claims. Furthermore, the terms "comprise", "include" or any other variation thereof in embodiments of the present disclosure are intended to encompass a non-exclusive inclusion, such that a process, method, article or device comprising a series of elements includes not only those elements, but also include other elements not expressly listed, or include elements inherent to such a process, method, article or device. Without further limitation, an element defined by the phrase "comprising one..." does not preclude the presence of additional identical elements in a process, method, article or device that includes the element.

In addition, the present disclosure may also have the following configurations:

(1) A first electronic device for an integrated sensing and communication system, comprising a processing circuitry configured to indicate control information related to transmission of a communication signal and a sensing signal to a second electronic device, such that the second electronic device is able to perform reception and/or processing of the communication signal and/or the sensing signal according to the control information.

(2) The first electronic device of (1), wherein, the control information indicates a transmission pattern of the communication signal and the sensing signal, wherein, the transmission pattern comprises any of: a first pattern of transmitting the communication signal and the sensing signal by using a same time-frequency resource, a second pattern of only transmitting the communication signal utilizing a separate time-frequency resource, and a third pattern of only transmitting the sensing signal utilizing a separate time-frequency resource.

(3) The first electronic device of (2), wherein, the control information comprises duration information, and wherein,

- the transmission pattern is explicitly indicated by the control information, the duration information being the duration of the transmission pattern, or
- the transmission pattern is implicitly indicated by the control information, the duration information indicating one of the following information: the duration during which the communication signal and the sensing signal are transmitted using the same time-frequency resource, the duration during which only the communication signal is transmitted utilizing the separate time-frequency resource, and the duration during which only the sensing signal is transmitted utilizing the separate time-frequency resource.

(4) The first electronic device of (2) or (3), wherein, in the case of the transmission pattern being the first pattern, the control information further indicates at least one parameter for canceling interference from the sensing signal to the communication signal by the second electronic device.

(5) The first electronic device of (2) or (3), wherein, the processing circuitry is further configured to transmit the sensing signal, for each transmission of the sensing signal, utilizing one sensing beam of a plurality of sensing beams corresponding to a plurality of directions, and wherein, the processing circuitry is further configured to determine the transmission pattern based at least on interference intensity from the utilized sensing beam to the communication signal.

(6) The first electronic device of (5), wherein

the processing circuitry is further configured to classify the plurality of sensing beams as strong interference sensing beams and weak interference sensing beams, and wherein, the processing circuitry is further configured to determine the transmission pattern for a weak interference sensing beam as the first pattern, and the processing circuitry is configured to determine the transmission pattern for a strong interference sensing beam as the second pattern or the third pattern further based on a priority between communication and sensing.

(7) The first electronic device of (5), wherein

the processing circuitry is further configured to receive, from the second electronic device, feedback information related to the interference intensity from the sensing beam, and

**EP 4 675 963 A1**

the processing circuitry is further configured to dynamically adjust classification of the strong interference sensing beams and the weak interference sensing beams based on the feedback information.

(8) The first electronic device of (2) or (3), wherein,

the processing circuitry is further configured to transmit the sensing signal utilizing a plurality of sensing beams corresponding to a plurality of directions in a scanning manner, and,
the processing circuitry is further configured to skip one or more sensing beams corresponding to the sensing signal to be transmitted with the third pattern in each round of scanning, and transmit the sensing signal with the third pattern utilizing the skipped one or more sensing beams after completing one time of downlink transmission for the communication signal.

(9) The first electronic device of (2) or (3), wherein, in the case of the transmission pattern being the first pattern, the processing circuitry is further configured to design the sensing signal based on the communication signal, such that the second electronic device is able to directly demodulate the communication signal and/or the sensing signal from the received signal.
(10) The first electronic device of (9), wherein

the sensing signal is designed as an orthogonal signal with the communication signal; or
the sensing signal is designed as being associated with the communication signal, such that a signal power gain of the communication signal received by the second electronic device can be increased by adjusting the sensing signal.

(11) The first electronic device of any of (1)-(3), wherein, the control information further comprises information indicating a sensing beam configuration.
(12) The first electronic device of any of (1)-(3), wherein the first electronic device and the second electronic device are terminal devices of both communication parties in a sidelink communication; or

the first electronic device is a control device for wireless communication, and the second electronic device is a terminal device for wireless communication; or
the first electronic device is a terminal device for wireless communication, and the second electronic device is a control device for wireless communication.

(13) The first electronic device of (12), wherein, in the case of the first electronic device being a terminal device:

the processing circuitry is further configured to transmit information indicating a sensing capability of the first electronic device to a control device for wireless communication;
receive information indicating a sensing beam configuration from the control device; and
configure one or more beams for transmitting the sensing signal according to the information indicating the sensing beam configuration.

(14) A second electronic device for an integrated sensing and communication system, comprising a processing circuitry configured to perform reception and/or processing of a communication signal and/or a sensing signal according to control information related to transmission of the communication signal and the sensing signal indicated by a first electronic device.
(15) The second electronic device of (14), wherein, the control information indicates a transmission pattern of the communication signal and the sensing signal, wherein, the transmission pattern comprises any of: a first pattern of transmitting the communication signal and the sensing signal by using a same time-frequency resource, a second pattern of only transmitting the communication signal utilizing a separate time-frequency resource, and a third pattern of only transmitting the sensing signal utilizing a separate time-frequency resource.
(16) The second electronic device of (15), wherein, the control information comprises duration information, and wherein,

- the transmission pattern is explicitly indicated by the control information, the duration information being the duration of the transmission pattern, or
- the transmission pattern is implicitly indicated by the control information, the duration information indicating one of the following information: the duration during which the communication signal and the sensing signal are transmitted using the same time-frequency resource, the duration during which only the communication signal is transmitted utilizing the separate time-frequency resource, and the duration during which only the sensing signal is transmitted utilizing the separate time-frequency resource.

(17) The second electronic device of (15) or (16), wherein, in the case of the transmission pattern being the first pattern, the control circuitry is further configured to jointly estimate the communication signal and a sensing beam gain from the received signal based at least on an estimated value of a communication beam gain and a sensing signal sequence.

(18) The second electronic device of (17), wherein, the control circuitry is further configured to jointly estimate the communication signal and the sensing beam gain from the received signal also based on at least one parameter, wherein,

the at least one parameter comprises at least one of the following parameters: a signal to interference ratio level, a signal format for a sensing beam, an initial value of the sensing beam gain for joint estimation, and a number of beams of the sensing signal, and wherein,

one or more of the at least one parameter is indicated by the control information.

(19) The second electronic device of (15) or (16), wherein, for each transmission of the sensing signal, the sensing signal is transmitted utilizing one sensing beam of a plurality of sensing beams corresponding to a plurality of directions, and

wherein, the transmission pattern is determined based at least on interference intensity from the utilized sensing beam to the communication signal.

(20) The second electronic device of (19), wherein, the processing circuitry is further configured to:

the processing circuitry is further configured to transmit, to the first electronic device, feedback information related to the interference intensity from the sensing beam.

(21) The second electronic device of (15) or (16), wherein, the sensing signal is transmitted utilizing a plurality of sensing beams corresponding to a plurality of directions in a scanning manner, and wherein,

in each round of scanning, one or more sensing beams corresponding to the sensing signal to be transmitted with the third pattern are skipped, and the sensing signal is transmitted with the third pattern utilizing the skipped one or more sensing beams after completing one time of downlink transmission for the communication signal.

(22) The second electronic device of (15) or (16), wherein, the processing circuitry is further configured to directly demodulate the communication signal and/or the sensing signal from the received signal, in the case of the transmission pattern being the first pattern and the sensing signal is designed based on the communication signal in one of the following ways:

the sensing signal is designed as an orthogonal signal with the communication signal; or

the sensing signal is designed as being associated with the communication signal, such that signal power gain of the communication signal received by the second electronic device can be increased by adjusting the sensing signal.

(23) The second electronic device of any of (14)-(16), wherein, the processing circuitry is further configured to receive the information indicating the sensing beam configuration from the first electronic device or the control device.

(24) The second electronic device of (23), wherein, the processing circuitry is further configured to perform processing of the sensing signal based on the information indicating the sensing beam configuration.

(25) The second electronic device of any of (14)-(16), wherein

the first electronic device and the second electronic device are terminal devices of both communication parties in a sidelink communication; or

the first electronic device is a control device for wireless communication, and the second electronic device is a terminal device for wireless communication; or

the first electronic device is a terminal device for wireless communication, and the second electronic device is a control device for wireless communication.

(26) A method for a first electronic device in an integrated sensing and communication system, comprising: indicating control information related to transmission of a communication signal and a sensing signal to a second electronic device, such that the second electronic device is able to perform reception and/or processing of the communication signal and/or the sensing signal according to the control information.

(27) A method for a second electronic device in an integrated sensing and communication system, comprising: performing reception and/or processing of a communication signal and/or a sensing signal according to control information related to transmission of the communication signal and the sensing signal indicated by a first electronic device.

(28) A non-transitory computer-readable storage medium having executable instructions stored thereon, which, when executed, implement the method of any of (26) and (27)

(29) A device comprising:

a processor,
a storage having executable instructions stored thereon, which, when executed, implement the method of any of (26) and (27).

**Claims**

1. A first electronic device for an integrated sensing and communication system, comprising a processing circuitry configured to indicate control information related to transmission of a communication signal and a sensing signal to a second electronic device, such that the second electronic device is able to perform reception and/or processing of the communication signal and/or the sensing signal according to the control information.

2. The first electronic device of claim 1, wherein, the control information indicates a transmission pattern of the communication signal and the sensing signal, wherein, the transmission pattern comprises any of: a first pattern of transmitting the communication signal and the sensing signal by using a same time-frequency resource, a second pattern of only transmitting the communication signal utilizing a separate time-frequency resource, and a third pattern of only transmitting the sensing signal utilizing a separate time-frequency resource.

3. The first electronic device of claim 2, wherein, the control information comprises duration information, and wherein,

- the transmission pattern is explicitly indicated by the control information, the duration information being the duration of the transmission pattern, or
- the transmission pattern is implicitly indicated by the control information, the duration information indicating one of the following information: the duration during which the communication signal and the sensing signal are transmitted using the same time-frequency resource, the duration during which only the communication signal is transmitted utilizing the separate time-frequency resource, and the duration during which only the sensing signal is transmitted utilizing the separate time-frequency resource.

4. The first electronic device of claim 2 or 3, wherein, in the case of the transmission pattern being the first pattern, the control information further indicates at least one parameter for canceling interference from the sensing signal to the communication signal by the second electronic device.

5. The first electronic device of claim 2 or 3, wherein, the processing circuitry is further configured to transmit the sensing signal, for each transmission of the sensing signal, utilizing one sensing beam of a plurality of sensing beams corresponding to a plurality of directions, and
wherein, the processing circuitry is further configured to determine the transmission pattern based at least on interference intensity from the utilized sensing beam to the communication signal.

6. The first electronic device of claim 5, wherein

the processing circuitry is further configured to classify the plurality of sensing beams as strong interference sensing beams and weak interference sensing beams, and
wherein, the processing circuitry is further configured to determine the transmission pattern for a weak interference sensing beam as the first pattern, and the processing circuitry is configured to determine the transmission pattern for a strong interference sensing beam as the second pattern or the third pattern further based on a priority between communication and sensing.

7. The first electronic device of claim 5, wherein

the processing circuitry is further configured to receive, from the second electronic device, feedback information related to the interference intensity from the sensing beam, and
the processing circuitry is further configured to dynamically adjust classification of the strong interference sensing beams and the weak interference sensing beams based on the feedback information.

8. The first electronic device of claim 2 or 3, wherein,

the processing circuitry is further configured to transmit the sensing signal utilizing a plurality of sensing beams corresponding to a plurality of directions in a scanning manner, and,
the processing circuitry is further configured to skip one or more sensing beams corresponding to the sensing signal to be transmitted with the third pattern in each round of scanning, and transmit the sensing signal with the third pattern utilizing the skipped one or more sensing beams after completing one time of downlink transmission for the communication signal.

9. The first electronic device of claim 2 or 3, wherein, in the case of the transmission pattern being the first pattern, the processing circuitry is further configured to design the sensing signal based on the communication signal, such that the second electronic device is able to directly demodulate the communication signal and/or the sensing signal from the received signal.

10. The first electronic device of claim 9, wherein

the sensing signal is designed as an orthogonal signal with the communication signal; or
the sensing signal is designed as being associated with the communication signal, such that a signal power gain of the communication signal received by the second electronic device can be increased by adjusting the sensing signal.

11. The first electronic device of any of claims 1-3, wherein, the control information further comprises information indicating a sensing beam configuration.

12. The first electronic device of any of claims 1-3, wherein

the first electronic device and the second electronic device are terminal devices of both communication parties in a sidelink communication; or
the first electronic device is a control device for wireless communication, and the second electronic device is a terminal device for wireless communication; or
the first electronic device is a terminal device for wireless communication, and the second electronic device is a control device for wireless communication.

13. The first electronic device of claim 12, wherein, in the case of the first electronic device being the terminal device:

the processing circuitry is further configured to transmit information indicating a sensing capability of the first electronic device to a control device for wireless communication;
receive information indicating a sensing beam configuration from the control device; and
configure one or more beams for transmitting the sensing signal according to the information indicating the sensing beam configuration.

14. A second electronic device for an integrated sensing and communication system, comprising a processing circuitry configured to perform reception and/or processing of a communication signal and/or a sensing signal according to control information related to transmission of the communication signal and the sensing signal indicated by a first electronic device.

15. The second electronic device of claim 14, wherein, the control information indicates a transmission pattern of the communication signal and the sensing signal, wherein, the transmission pattern comprises any of: a first pattern of transmitting the communication signal and the sensing signal by using a same time-frequency resource, a second pattern of only transmitting the communication signal utilizing a separate time-frequency resource, and a third pattern of only transmitting the sensing signal utilizing a separate time-frequency resource.

16. The second electronic device of claim 15, wherein, the control information comprises duration information, and wherein,

- the transmission pattern is explicitly indicated by the control information, the duration information being the duration of the transmission pattern, or
- the transmission pattern is implicitly indicated by the control information, the duration information indicating one of the following information: the duration during which the communication signal and the sensing signal are transmitted using the same time-frequency resource, the duration during which only the communication signal is transmitted utilizing the separate time-frequency resource, and the duration during which only the sensing signal is transmitted utilizing the separate time-frequency resource.

17. The second electronic device of claim 15 or 16, wherein, in the case of the transmission pattern being the first pattern, the control circuitry is further configured to jointly estimate the communication signal and a sensing beam gain from the received signal based at least on an estimated value of a communication beam gain and a sensing signal sequence.

18. The second electronic device of claim 17, wherein, the control circuitry is further configured to jointly estimate the communication signal and the sensing beam gain from the received signal also based on at least one parameter, wherein,

the at least one parameter comprises at least one of the following parameters: a signal to interference ratio level, a signal format for a sensing beam, an initial value of the sensing beam gain for joint estimation, and a number of beams of the sensing signal, and wherein,
one or more of the at least one parameter is indicated by the control information.

19. The second electronic device of claim 15 or 16, wherein, for each transmission of the sensing signal, the sensing signal is transmitted utilizing one sensing beam of a plurality of sensing beams corresponding to a plurality of directions, and wherein, the transmission pattern is determined based at least on interference intensity from the utilized sensing beam to the communication signal.

20. The second electronic device of claim 19, wherein, the processing circuitry is further configured to:
the processing circuitry is further configured to transmit, to the first electronic device, feedback information related to the interference intensity from the sensing beam.

21. The second electronic device of claim 15 or 16, wherein,

the sensing signal is transmitted utilizing a plurality of sensing beams corresponding to a plurality of directions in a scanning manner, and wherein,
in each round of scanning, one or more sensing beams corresponding to the sensing signal to be transmitted with the third pattern are skipped, and the sensing signal is transmitted with the third pattern utilizing the skipped one or more sensing beams after completing one time of downlink transmission for the communication signal.

22. The second electronic device of claim 15 or 16, wherein, the processing circuitry is further configured to directly demodulate the communication signal and/or the sensing signal from the received signal, in the case of the transmission pattern being the first pattern and the sensing signal is designed based on the communication signal in one of the following ways:

the sensing signal is designed as an orthogonal signal with the communication signal; or
the sensing signal is designed as being associated with the communication signal, such that signal power gain of the communication signal received by the second electronic device can be increased by adjusting the sensing signal.

23. The second electronic device of any of claims 14-16, wherein, the processing circuitry is further configured to receive the information indicating the sensing beam configuration from the first electronic device or the control device.

24. The second electronic device of claim 23, wherein, the processing circuitry is further configured to perform processing of the sensing signal based on the information indicating the sensing beam configuration.

25. The second electronic device of any of claims 14-16, wherein

the first electronic device and the second electronic device are terminal devices of both communication parties in a sidelink communication; or
the first electronic device is a control device for wireless communication, and the second electronic device is a terminal device for wireless communication; or
the first electronic device is a terminal device for wireless communication, and the second electronic device is a control device for wireless communication.

26. A method for a first electronic device in an integrated sensing and communication system, comprising: indicating control information related to transmission of a communication signal and a sensing signal to a second electronic device, such that the second electronic device is able to perform reception and/or processing of the communication signal and/or the sensing signal according to the control information.

27. A method for a second electronic device in an integrated sensing and communication system, comprising: performing reception and/or processing of a communication signal and/or a sensing signal according to control information related to transmission of the communication signal and the sensing signal indicated by a first electronic device.

28. A non-transitory computer-readable storage medium having executable instructions stored thereon, which, when executed, implement the method of any of claims 26 and 27.

29. A device comprising:

a processor,
a storage having executable instructions stored thereon, which, when executed, implement the method of any of claims 26 and 27.

FIG. 1

Communication

Sensing

**FIG. 2A**

Communication

Sensing

Sensing Echo

V2V Communication

**FIG. 2B**

FIG. 3

FIG. 4

Electronic Device
10

Processing Circuitry
102

Control Information Determination
Unit

Sensing Control Unit

Memory 104

Communication Unit 106

**FIG. 5**

Electronic Device
20

Processing Circuitry
202

Control Information Determination
Unit

Interference Control Unit

Memory 204

Communication Unit 206

**FIG. 6**

| Pattern 1 | Pattern 2 | Pattern 3 |
|---|---|---|
| Communication Signal | Communication Signal | |
| Sensing Signal | | Sensing Signal |

**FIG. 7**

Communication

Sensing

**FIG. 8**

90

S902 — The receiving end receives the communication signal and the sensing signal

S904 — Demodulated correctly? — Yes

No

S906 — Interference cancellation

S908 — Demodulated correctly? — Yes

No

S914 — Interference beam gain exceeds threshold?

Yes ← → No

S910 — Request a reference signal to measure interference

S916 — Mark the sensing beam as a weak interference beam

S912 — Mark the sensing beam as a strong interference beam and provide feedback to the transmitting end

**FIG. 9**

**FIG. 10**

**FIG. 11A**

**FIG. 11B**

120

```
┌─────────────────┐                                  ┌─────────────────┐
│  Transmitting   │                                  │                 │
│      End        │                                  │  Receiving End  │
└─────────────────┘                                  └─────────────────┘
         │                                                     │
┌─────────────────────────┐                                   │
│ Determine a configuration│                                  │
S1202│ related to transmission of│                            │
│ a communication signal and│                                 │
│    a sensing signal     │                                   │
└─────────────────────────┘                                   │
         │        Indicate control information related to     │
         │    S1204  the transmission of the communication    │
         │           signal and the sensing signal            │
         │────────────────────────────────────────────────────▶│
         │                                                     │
         │                                                     │
         │    S1206          Transmitting the                  │
         │             communication signal and/or             │
         │                  the sensing signal                 │
         │────────────────────────────────────────────────────▶│
         │                                                     │
         │                                          ┌──────────────────────┐
         │                              S1208        │ Perform reception and/or│
         │                                          │ processing of the signals│
         │                                          └──────────────────────┘
         │             Request a reference signal             │
         │               to measure interference              │
         │    S1210           intensity of sensing            │
         │                         beam(s)                     │
         │◀────────────────────────────────────────────────────│
         │                                                     │
         │                                          ┌──────────────────────┐
         │                              S1212        │ Interference measurement│
         │                                          └──────────────────────┘
         │             Feed back the interference             │
         │    S1214           intensity of the sensing        │
         │                         beam(s)                     │
         │◀────────────────────────────────────────────────────│
┌─────────────────────────┐                                   │
│ Adjust the configuration │                                  │
│     related to the       │                                  │
S1216│   transmission of the  │                               │
│ communication signal and │                                  │
│    the sensing signal    │                                  │
└─────────────────────────┘                                   │
         │                                                     │
```

# FIG. 12

1300

1301    1302    1303

| CPU | ROM | RAM |

1304

1305

Input/Output Interface

| Input Section | Output Section | Storage Section | Communication Section | Driver |

1306    1307    1308    1309

1310

Removable Medium    1311

**FIG. 13**

**FIG. 14**

**FIG. 15**

**FIG. 16**

**FIG. 17**

## INTERNATIONAL SEARCH REPORT

| | International application No. |
|---|---|
| | **PCT/CN2024/080676** |

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNABS, CNTXT, VEN, USTXT, WOTXT, EPTXT, CNKI: 感测, 感知, 通信, 通感一体化, 通感, 一体化, 第二, 设备, 终端, 同时, 仅, 发送, 传输, 信号, 时域, 时频, 频域, 接收, 处理, 接受, 指示, 资源, 干扰: sense, communication, same, signal, UE, terminal, time domain, frequency domain, second, send, transfer, transmit, integrated, ISAC

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115767572 A (HUAWEI TECHNOLOGIES CO., LTD.) 07 March 2023 (2023-03-07) description, paragraphs [0058]-[0201], and figures 1-14 | 1-29 |
| X | WO 2023272602 A1 (GUANGDONG OPPO MOBILE COMMUNICATIONS CO., LTD.) 05 January 2023 (2023-01-05) description, page 3, line 1-page 13, line 16, and figures 1-13 | 1-29 |
| A | CN 113727446 A (CHINA ACADEMY OF INFORMATION AND COMMUNICATIONS TECHNOLOGY) 30 November 2021 (2021-11-30) entire document | 1-29 |
| A | CN 115484682 A (BEIJING UNIVERSITY OF POSTS AND TELECOMMUNICATIONS) 16 December 2022 (2022-12-16) entire document | 1-29 |
| A | CN 115515245 A (HUAWEI TECHNOLOGIES CO., LTD.) 23 December 2022 (2022-12-23) entire document | 1-29 |
| A | WO 2022065553 A1 (LG ELECTRONICS INC.) 31 March 2022 (2022-03-31) entire document | 1-29 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 May 2024** | **18 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080676**

| Patent document cited in search report | | | Publication date (day/month/year) | Patent family member(s) | | | Publication date (day/month/year) |
|---|---|---|---|---|---|---|---|
| CN | 115767572 | A | 07 March 2023 | WO | 2023030209 | A1 | 09 March 2023 |
| WO | 2023272602 | A1 | 05 January 2023 | CN | 117242365 | A | 15 December 2023 |
| CN | 113727446 | A | 30 November 2021 | | None | | |
| CN | 115484682 | A | 16 December 2022 | WO | 2024046138 | A1 | 07 March 2024 |
| CN | 115515245 | A | 23 December 2022 | WO | 2022268096 | A1 | 29 December 2022 |
| WO | 2022065553 | A1 | 31 March 2022 | KR | 20230051222 | A | 17 April 2023 |
| | | | | US | 2023344505 | A1 | 26 October 2023 |

Form PCT/ISA/210 (patent family annex) (July 2022)

**EP 4 675 963 A1**

**Patent documents cited in the description**

- CN 202310266991